# EUROPEAN PATENT SPECIFICATION

(11) **EP 4 367 860 B1**
(45) Date of publication and mention of the grant of the patent: **16.09.2026**
(21) Application number: 21742803.6
(22) Date of filing: 07.07.2021
(51) Int. Cl.: H04L 41/5003, H04W 28/24, H04W 36/00, H04L 9/40, H04L 41/5006, H04L 41/5009, H04L 41/50

(54) **SECURITY SERVICE ORCHESTRATION FUNCTION IN A SERVICE-BASED ARCHITECTURE**
SICHERHEITSDIENSTORCHESTRIERUNGSFUNKTION IN EINER DIENSTBASIERTEN ARCHITEKTUR
FONCTION D'ORCHESTRATION DE SERVICES DE SÉCURITÉ DANS UNE ARCHITECTURE BASÉE SUR DES SERVICES

(43) Date of publication of application: 15.05.2024
(73) Proprietor: Telefonaktiebolaget LM Ericsson (publ), 164 83 Stockholm (SE)
(72) Inventor: HAKALA, Harri, 20380 Turku (FI); PIETIKÄINEN, Ari, 02320 Espoo (FI); PUHAKAINEN, Anu, 02210 Espoo (FI)
(74) Representative: Ericsson
(86) International application number: PCT/EP2021/068808
(87) International publication number: WO 2023/280397

(56) References cited:
- WO-A1-2020/049212
- US-A1- 2014 108 639
- US-A1- 2019 141 536
- US-A1- 2020 344 267
- US-A9- 2021 203 570
- RUBEN TRAPERO ET AL: "A novel approach to manage cloud security SLA incidents", FUTURE GENERATION COMPUTER SYSTEMS, vol. 72, 1 July 2017 (2017-07-01), NL, pages 193 - 205, XP055581063, ISSN: 0167-739X, DOI: 10.1016/j.future.2016.06.004
- MARTIN GILJE JAATUN ET AL: "Security SLAs An Idea Whose Time Has Come?", 20 August 2012, ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 123 - 130, ISBN: 978-3-540-74549-5, XP047013727

## Description

### TECHNICAL FIELD

The present disclosure relates generally to security orchestration and management communications, and more particularly to methods and devices for a security service orchestration function in a service-based architecture (SBA).

### BACKGROUND

Current 3rd Generation Partnership Project (3GPP) system architecture for the 5th Generation (5G) System, 3GPP TS 23.501, defines support for data connectivity and services enabling deployments to use techniques such as, e.g., Network Function Virtualization (NFV) and Software Defined Networking (SDN). The 5G architecture is defined as service-based interactions between network functions. 3GPP security architecture and procedures for the 5G system, 3GPP TS 33.501, specifies the security features and the security mechanisms for the 5G System and the 5G Core, and the security procedures performed within the 5G System. Security orchestration and management are left outside the scope in both 3GPP TS 23.501 and TS 33.501. 3GPP standardization does not deal with security concerns related to the deployment, configuration, or continuous operations of the technology. Secure orchestration and management of virtualization, general forms of security management (e.g., monitoring) are fundamental for telecom networks in 5G and beyond to operate robustly. Since there are no specifications for security management and orchestration interfaces in 3GPP, vendor-specific, non-standard interfaces may appear which makes interoperability difficult, unstable, risky, and costly.

Users of telecommunication services are facing an increasing number of security and privacy threats against their data and services. Without visibility to the security posture and protective measures provided to them by communication service providers, it is difficult to judge in reliable and repeatable manner if their expectations on security service levels are met and if there is need for additional mitigation of security risks.

Generic Service Level Agreements do not necessarily include security aspects. Even if defined, the definitions are static and often ambiguous. There is no transparency of the security posture provided by communication service providers (CSPs) or public land mobile networks (PLMNs) so an enterprise or end user cannot properly assess the risks associated with the utilization of a CSP's or PLMN's services. The same transparency is lacking between CSPs or

PLMNs. Document US 2021/203570A9 discloses Security Service Level Agreement between tenants and a service provider and between service providers for generating a composite service. Document WO 2020/049212A1 discloses Service Level Agreement between a home PLMN and a visited PLMN for a roaming client.

Current solutions have the following shortcomings:
1. It is not possible for the telecommunication service users, e.g., enterprises, to place dynamic security requirements to the CSPs or PLMNs.
2. It is not possible for the CSPs or PLMNs to pass users' dynamic security requirements to other CSPs or PLMNs, e.g., roaming partners, (even if such requirements would exist).
3. It is not possible for the CSP or PLMN to dynamically perform security capability mapping and optimization.
4. It is not possible for the CSPs or PLMNs to monitor their partners' compliance to users' dynamic security requirements, (even if such requirements would exist).
5. It is not possible for the CSPs or PLMNs to report their own compliance towards the users' dynamic security requirements, (even if such requirements would exist).

The following related issues can be identified particularly with the current 3GPP System architecture for the 5G system:
1. Security in a service-based architecture (SBA) is unconnected from other network functions, that is, there are no security orchestration capabilities or reference points towards various network functions and network entities.
2. There is no end-to-end security orchestration for SBA services that are distributed between several domains or Public Land Mobile Networks (PLMNs)
3. 3GPP specified network functions have limited capabilities in terms of providing, exposing, and negotiating security information.
4. In today's solutions security and privacy information is transferred and processed as part of standard service orchestration which implies security risks and isolation challenges (defense in depth).
5. Current information exchange between PLMNs is based on roaming agreements which focus delivering legacy voice and mobile data for the visiting subscribers and the respective billing information. These agreements are static, not dynamic or updated regularly. There is no mechanism in roaming agreements to handshake what kind of security and privacy levels are acceptable for the visiting subscribers with regard to 5G services and network slicing. There is no mechanism in roaming agreements to specify and transfer security and privacy related attributes and to interexchange security and privacy related information between roaming partners.
6. Current service level agreements (operator-operator, operator-enterprise) are based on performance objectives related to availability and reliability. In few cases when security is taken into consideration, security is still a non-negotiable, meaning there is no possibility to acquire a service with specific security characteristics.
7. No current practice exists on how an enterprise (service user) or CSP (PLMN) can monitor and audit in real time security attributes related to their offered service, especially in roaming situations, in order to have a guarantee of security and privacy of the service, or to require updates to security levels of the service.

### SUMMARY

According to some embodiments of inventive concepts, a security service orchestration function (SSOF) in a communication infrastructure provides capabilities for security orchestration for an information technology system in a standardized manner. In some examples, the communication infrastructure includes a plurality of PLMNs and a plurality of enterprises serving a plurality end-users. The SSOF enables submitting a security service level agreement (S-SLA) based requirements as security attributes from an enterprise to an operator or between operators in roaming situations through standardized interfaces and reference points. The SSOF negotiates and coordinates the necessary security attributes and their associated levels or strengths between enterprises in a HPLMN and converts the different enterprise S-SLA requirements into a consistent and unified S-SLA offered to enterprises in the HPLMN. The HPLMN or SSOF of the HPLMN negotiates with different VPLMNs a security service level that can be achieved between the PLMNs in roaming situations, a S-SLA request is based on the HPLMN's own security policy and unified S-SLA the HPLMN wants to fulfill in roaming situations. As a result of the negotiation, there is mutual understanding for the agreed S-SLA between the HPLMN and VPLMNs in roaming situations. Based on that S-SLA, the HPLMN monitors and communicates the compliance status and compliance violations for S-SLA to the VPLMNs and enterprises.

According to some embodiments of inventive concepts, a method implemented by a security service orchestration function (SSOF) in a communication infrastructure, that includes a plurality of public land mobile networks (PLMNs) and a plurality of enterprises, for orchestration of a security service level agreement (S-SLA) includes receiving, by a SSOF in a home public land mobile network (HPLMN), a S-SLA request from one or more of the plurality of enterprises. Each S-SLA request includes a plurality of requirements. The HPLMN corresponds to one of the plurality of PLMNs. The method also includes converting each S-SLA request into a consistent and unified S-SLA offerable to each enterprise. The consistent and unified S-SLA includes security attributes that the HPLMN is capable of providing each of the enterprises. The method also includes offering the consistent and unified S-SLA to each enterprise that submitted the S-SLA request. The method also includes transforming each S-SLA request from the one or more enterprises into security policies and controls to be enforced within the HPLMN.

According to some embodiments of inventive concepts, a computing device includes processing circuitry and a memory coupled with the processing circuitry. The memory includes instructions that when executed by the processing circuitry causes the computing device to receive, by a SSOF in a home public land mobile network (HPLMN), a S-SLA request from one or more of a plurality of enterprises. Each S-SLA request includes a plurality of requirements. The memory also includes instructions that when executed by the processing circuitry causes the computing device to convert each S-SLA request into a consistent and unified S-SLA offerable to each enterprise. The consistent and unified S-SLA includes security attributes that the HPLMN is capable of providing each of the enterprises. The memory also includes instructions that when executed by the processing circuitry causes the computing device to offer the consistent and unified S-SLA to each enterprise that submitted the S-SLA request. The memory further includes instructions that when executed by the processing circuitry causes the computing device to transform each S-SLA request from the one or more enterprises into security policies and controls to be enforced within the HPLMN.

According to some embodiments of inventive concepts, a computing device is adapted to receive, by a SSOF in a home public land mobile network (HPLMN), a S-SLA request from one or more of a plurality of enterprises. Each S-SLA request includes a plurality of requirements. The computing device is also adapted to convert each S-SLA request into a consistent and unified S-SLA offerable to each enterprise. The consistent and unified S-SLA includes security attributes that the HPLMN is capable of providing each of the enterprises. The computing device is also adapted to offer the consistent and unified S-SLA to each enterprise that submitted the S-SLA request. The computing device is further adapted to transform each S-SLA request from the one or more enterprises into security policies and controls to be enforced within the HPLMN.

According to some embodiments of inventive concepts, a method is implemented by a security service orchestration function (SSOF) in a communication infrastructure, that includes a plurality of public land mobile networks (PLMNs) and a plurality of enterprises, for orchestration of a security service level agreement (S-SLA). The method includes receiving, by a SSOF in a visited public land mobile network (VPLMN), S-SLA requirements from a SSOF in a home public land mobile network (HPLMN). The method also includes transmitting, by the SSOF in the VPLMN, an initial S-SLA fulfillment level to the SSOF in the HPLMN in response to receiving the S-SLA requirements. The method also includes receiving a S-SLA compliance monitoring request from the SSOF in the HPLMN. The method further includes transmitting a S-SLA compliance status report to the SSOF in the HPLMN in response to receiving the S-SLA compliance monitoring request and/or in requested intervals.

According to some embodiments of inventive concepts, a computing device includes processing circuitry and a memory coupled with the processing circuitry. The memory includes instructions that when executed by the processing circuitry causes the computing device to receive, by a SSOF in a visited public land mobile network (VPLMN), S-SLA requirements from a SSOF in a home public land mobile network (HPLMN). The memory includes instructions that when executed by the processing circuitry causes the computing device to transmit, by the SSOF in the VPLMN, an initial S-SLA fulfillment level to the SSOF in the HPLMN in response to receiving the S-SLA requirements. The memory also includes instructions that when executed by the processing circuitry causes the computing device to receive a S-SLA compliance monitoring request from the SSOF in the HPLMN. The memory further includes instructions that when executed by the processing circuitry causes the computing device to transmit a S-SLA compliance status report to the SSOF in the HPLMN in response to receiving the S-SLA compliance monitoring request and/or in requested intervals.

According to some embodiments of inventive concepts, a computing device is adapted to receive, by a SSOF in a visited public land mobile network (VPLMN), S-SLA requirements from a SSOF in a home public land mobile network (HPLMN). The computing device is also adapted to transmit, by the SSOF in the VPLMN, an initial S-SLA fulfillment level to the SSOF in the HPLMN in response to receiving the S-SLA requirements. The computing device is also adapted to receive a S-SLA compliance monitoring request from the SSOF in the HPLMN. The computing device is further adapted to transmit a S-SLA compliance status report to the SSOF in the HPLMN in response to receiving the S-SLA compliance monitoring request and/or in requested intervals.

According to some embodiments of inventive concepts, a method is implemented by a security service orchestration function (SSOF) in a communication infrastructure, that includes a plurality of public land mobile networks (PLMNs) and a plurality of enterprises, for orchestration of a security service level agreement (S-SLA). The method includes transmitting, by a home public land mobile network (HPLMN) of the plurality of PLMNs, a S-SLA request to one or more visited public land mobile networks (VPLMNs) of the plurality of PLMNs to support specific business services with specific security attributes. The method also includes receiving a response from each VPLMN including a unique S-SLA including security attributes the VPLMN is capable of providing and based on the S-SLA request. The method further includes merging the security attributes received from each VPLMN into a common security baseline capability template S-SLA for communication to business services users or each of the enterprises.

According to some embodiments of inventive concepts, a method is implemented by a security service orchestration function (SSOF) in a communication infrastructure, that includes a plurality of public land mobile networks (PLMNs) and a plurality of enterprises, for orchestration of a security service level agreement (S-SLA). The method includes receiving, by a home public land mobile network (HPLMN) of the plurality of PLMNs, an enterprise S-SLA request from a requesting enterprise. The enterprise S-SLA request includes a specific level of security attributes the requesting enterprise wants fulfilled in roaming situations. The method also includes performing capability mapping between the security attributes in the enterprise S-SLA request and a common security baseline capability template S-SLA of the HPLMN. The common security baseline capability template S-SLA defines a common capability S-SLA offerable by the HPLMN. The method also includes offering the common capability S-SLA to the requesting enterprise for roaming situations in response to the common security baseline capability template S-SLA matching the security attributes in the enterprise S-SLA request. The method further includes receiving a response from the requesting enterprise. The response includes an acceptance or a decline of the common capability S-SLA.

According to some embodiments of inventive concepts, a computing device includes processing circuitry and a memory coupled with the processing circuitry. The memory includes instructions that when executed by the processing circuitry causes the computing device to receive, by a home public land mobile network (HPLMN) of a plurality of public land mobile networks (PLMNs), an enterprise S-SLA request from a requesting enterprise. The enterprise S-SLA request includes a specific level of security attributes the requesting enterprise wants fulfilled in roaming situations. The memory also includes instructions that when executed by the processing circuitry causes the computing device to perform capability mapping between the security attributes in the enterprise S-SLA request and a common security baseline capability template S-SLA of the HPLMN. The common security baseline capability template S-SLA defines a common capability S-SLA offerable by the HPLMN. The memory also includes instructions that when executed by the processing circuitry causes the computing device to offer the common capability S-SLA to the requesting enterprise for roaming situations in response to the common security baseline capability template S-SLA matching the security attributes in the enterprise S-SLA request. The memory further includes instructions that when executed by the processing circuitry causes the computing device to receive a response from the requesting enterprise. The response comprises an acceptance or a decline of the common capability S-SLA. The invention is defined in the appended claims.

Certain embodiments may provide one or more of the following advantages:
- Ability to centrally orchestrate security capabilities and features in a 3GPP architecture for various network functions, network entities and services.
- Ability to request and provide common and consistent security attributes for 5G service-based architecture (SBA) and future generations network services in a coordinated way.
- Ability to collect, share and expose enhanced security information with other network functions.
- Separation and isolation of security orchestration from service orchestration contributes to defense in depth principles and latest progress visible in draft specifications.
- Ability to interchange and orchestrate security specific attributes as part of service level agreements between PLMNs through a standardized reference point or interface.
- Provides standardized interfaces and reference points for security service orchestration.
- Ability to perform dynamic and automated security capability mapping and optimization for roaming.
- Facilitates security service level handshake between a PLMN and enterprises and between PLMNs.
- Provide regular updates on run-time compliance information from VPLMN to HPLMN and from HPLMN to enterprise.

All the above advantages are applicable for 5G SBA and future generation networks. The proposed solution is applicable to privacy related orchestration in a similar way as for security orchestration.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 is a block diagram of an example of a communication system including a security service level agreement (S-SLA) negotiation schema according to some embodiments of inventive concepts.
Figure 2 is a block diagram of an example of a security service orchestrator and security management module according to some embodiments of inventive concepts.
Figure 3 is a block diagram of an example of a computing device according to some embodiments of inventive concepts.
Figures 4A-4B are a flow chart of an example of a method of operation of a SSOF in a HPLMN according to some embodiments of inventive concepts.
Figure 5 is a flow chart of an example of a method of operation of a SSOF in a HPLMN interacting with supporting security management functions according to some embodiments of inventive concepts.
Figure 6 is a flow chart of an example of a method of operation of supporting security management functions according to some embodiments of inventive concepts.
Figure 7 is a flow chart of an example of a method of operation of a SSOF in a VPLMN according to some embodiments of inventive concepts.
Figure 8 is an example of a SSOF in a 3GPP 5G non-roaming architecture according to some embodiments of inventive concepts.
Figure 9 is an example of a SSOF in a 3GPP 5G roaming architecture according to some embodiments of inventive concepts.
Figures 10A-10C are a flow chart of an example of a method of operation of a SSOF according to some embodiments of inventive concepts.
Figure 11 is an illustration of an example of an agreement flow between a HPLMN and VPLMNs and between the HPLMN and enterprises for negotiation of S-SLA's corresponding to the exemplary method in Figures 10A-10C according to some embodiments of inventive concepts.
Figure 12 is a flow chart of an example of a method for monitoring for S-SLA fulfillment or compliance according to some embodiments of inventive concepts.
Figure 13 is an illustration of an example of a monitoring flow for S-SLA fulfillment or compliance corresponding to the exemplary method in Figure 12 according to some embodiments of inventive concepts.
Figure 14 is an illustration of an example of capability mapping from a HPLMN perspective according to some embodiments of inventive concepts.
Figure 15 is an illustration of an example of capability mapping management for a HPLMN according to some embodiments of inventive concepts.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

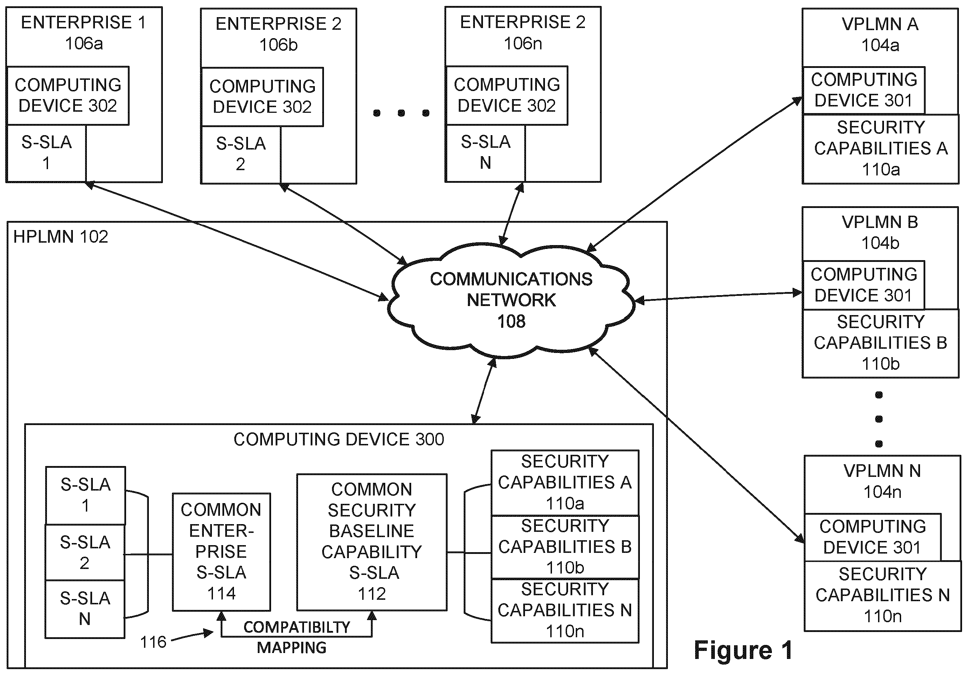

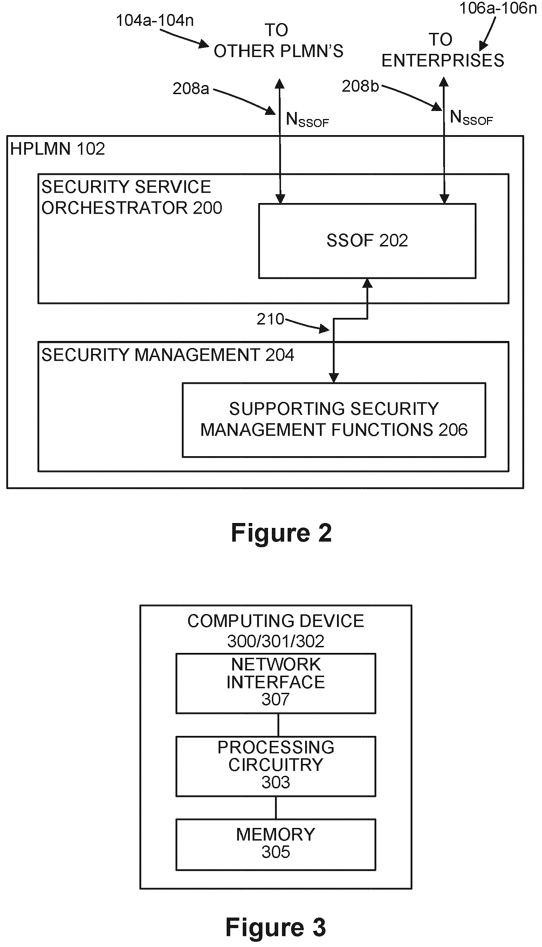

Figure 1 is a block diagram of an example of a communication system 100 including a security service level agreement (S-SLA) negotiation schema according to some embodiments of inventive concepts. Embodiments of the inventive concepts described herein are applicable to any communication system or information technology system based on network elements and appliances. The exemplary communication system 100 includes a plurality of public land mobile networks (PLMNs), e.g., a home public land mobile network (HPLMN) 102 and one or more visited public land mobile networks (VPLMNs) 104a-104n. The HPLMN 102 may also be referred to as a communications service provider (CSP) and the VPLMNs 104a-104n may also be referred to as CSPs, other CSPs or partner CSPs. The exemplary communication system 100 also includes a plurality of enterprises 106a-106n which may also be referred to an enterprise customers. As described in more detail herein, each of the VPLMNs 104a-104n include security capabilities 110a-110n that can be offered to other PLMNs, e.g., HPLMN 102. The HPLMN 102 and the VPLMNs 104a-104n communicate with one another via a communications network 108. The communications network 108 is any type of communications network, e.g., a wireless communications network, a wired communications network or combination wireless and wired communications network. In accordance with some examples, the HPLMN 102 includes a computing device 300 and each of the other VPLMNs include a computing device 301. In some examples, each of the enterprises include a computing device 302. An example of a computing device useable for any of the computing devices 300, 301 or 302 will be described with reference to Figure 3. The HPLMN 102, each of the VPLMNs 104a-104n and each of the enterprises 106a-106n may include any type of computing devices or communications device including additional components and different types of components than those illustrated in the example in Figure 3. The exemplary computing device 300, 301 or 302 illustrated in Figure 3 is shown as including minimal generic components for performing the inventive concepts described herein.

Security service level agreement (S-SLA) enablement and enforcement in a 3GPP service-based architecture (SBA) is implemented as a Security Service Orchestrator Function (SSOF) 202 in Figure 2. According to 5G system architecture principles, the SSOF 202 can interact directly with 3GPP network functions and network entities if required. The SSOF 202 supports interaction between PLMNs exchanging information on security policies to adhere to security service level agreements.

The 5G network is designed to be able to offer a different mix of capabilities to meet very diverse service requirements at the same time, meaning that security requirements for service may also be very different from industry to industry, service to service and per business customer, where the business customer could be an enterprise, specialized industry customer or individual consumers.

Global System for Mobile Communications Association (GSMA) for example, advertises that 5G networks, in combination with Network Slicing, provides business customers connectivity and data processing tailored to their specific business requirements. The network slice can be tailored based on the specific requirements adhering to a Service Level Agreement (SLA) agreed between (network slice) the customer and network slice provider, which is often a communications service provider (CSP), e.g., a HPLMN.

An issue with existing solutions including the network slicing is that enterprises are unable to place or submit (dynamic) security requirements to the CSP or PLMN and later monitor the compliance of how well these requirements are achieved by the CSP or PLMN. Additionally, CSPs or PLMNs are unable to pass their own or enterprise security requirements to other CSPs or PLMNs (roaming partners) and monitor the compliance of how well these requirements are achieved by the different roaming partners.

Accordingly, there is a need to have a well-defined standardized list of attributes that can characterize security for the network services, such as a network slice. These security attributes are negotiable between the CSP or PLMN and its enterprise customers.

Different enterprises have different security needs to protect their service, thus negotiable security attributes may vary depending on the enterprise and the industry segment the enterprise represents. For example, enterprises in public safety may have rather different security requirements to protect their services compared to for example, an enterprise in the automotive, energy, healthcare, or manufacturing industry.

Security protection of services may vary also whether the service is offered and delivered within a HPLMN of a CSP or if the service is offered within a VPLMN by another CSP when roaming. Negotiable security attributes can be categorized based on the main security principles: confidentiality, integrity, authentication and authorization, availability, added with separate categories for isolation, data sovereignty and mobile network operator (MNO) interworking.

Enterprises can define in a negotiation phase what security attributes they want to include in their Security Service Level Agreements (S-SLA's) and whether they are applicable for services in their home network and for visiting networks in case of roaming. Attribute values, that is, strength of security protection may vary when a service is offered in the home or visiting network. Negotiable security attributes categories and examples of attributes values or strengths include:
- Confidentiality attributes (C) ensure that the service is protected from unwanted information disclosure, e.g., packets/traffic are not possible of disclose outside the service and network slice. Different crypto algorithms and strength for those algorithms can be requested for roaming and non-roaming cases. Examples for confidentiality attributes that can be requested for the services include e.g., different strengths for Advanced Encryption Standard (AES): AES-128, AES-192, AES-256 and Triple Data Encryption Algorithm (TDES).
- Integrity attributes (I) ensure that the service integrity can be preserved, e.g., packets/traffic in a slice are not tampered with or replaced without noticing. Different integrity algorithms and strength for those algorithms can be requested for roaming and non-roaming cases. Examples of integrity attributes that can be requested for the services include e.g., different strengths for Secure Hash Algorithms (SHA): SHA-2, SHA-3, SHAKE128, SHAKE256.

- Authentication and authorization attributes (AA) ensure that only authorized persons, user accounts and network elements can interact with the service. Different authentication and authorization mechanisms for the service can be requested for roaming and non-roaming cases. Examples of authentication and authorization mechanisms include, e.g., multi-factor authentication for users, secondary authentication towards an AAA Server (AAA-S) which is hosted by a HPLMN operator or a trusted third party in order to access the specific Network Slice.
- Non-repudiation attributes (NR) ensure the assurance that someone cannot deny something. Non-repudiation artifacts include: an identity, the authentication of that identity and tangible evidence connecting the identified party to a particular communication or action. Different non-repudiation mechanisms can be requested, for instance different digital signature algorithms such as RSA, DSA, ECDSA, RSA with SHA.
- Availability attributes (A) ensure that the service and network functions providing the service remain accessible all the time for authorized users. Different availability mechanisms can be requested for roaming and non-roaming cases. Examples of availability mechanisms are extra security functions to be instantiated or activated, e.g., Physical Security Functions (PSF), Virtual Security Functions (VSF).
- Isolation attributes (IS) ensure that the service resources are not shared among other network users or services, e.g., information transferred in each slice are not shared among other slices. Different isolation mechanism can be requested for roaming and non-roaming cases. Example of isolation mechanisms include service specific isolation to ensure none of the network resources are shared with other customers or enterprises.
- Data sovereignty (DS) attributes ensure that the data always stays within specific jurisdictions. Different data sovereignty mechanisms can be requested for roaming and non-roaming cases. Example of data sovereignty attributes include, e.g., requesting allocation of network slice resources only from allowed IP domains, anonymization and pseudonymization of data if it is not possible to route the data traffic entirely within the specified jurisdictions. Data sovereignty attribute may also indicate that a data object should be dropped if data object is moving to a forbidden jurisdiction, or before the data object can be transfer to another jurisdiction, the data object is split into smaller parts.
- MNO Interworking attributes ensure that a specific S-SLA is fulfilled between roaming PLMNs. Examples of interworking attributes exchanged between roaming partners include:
   ∘ IP Address of IPsec gateway (GW) for Network Domain Security/Internet Protocol (NDS/IP) traffic between network security domains (exchanged over Za interfaces).
   ∘ security parameters for an N32 interface between Security Edge Protection Proxies SEPP's of a VPLMN and a HPLMN in a roaming scenario when Stand Alone (SA) deployment is used.
   ∘ IP address for an IPX provider in case of data roaming and signaling, e.g., Non-Stand Alone (NSA) deployment for LTE Diameter signaling or non-service-aware general-purpose connectivity for bilateral operator requirements.

Each enterprise 106a-106n has their own security intent and objectives which are driven by security risk evaluation and understanding. Each enterprise 106a-106n translates this security risk evaluation and understanding into security attributes defined in their security service level agreement (S-SLA). For example, the S-SLA may include information as to what extent the enterprise tolerates variation in different security attributes and what measures are mandatory in order to achieve their desired protection level for non-roaming and roaming cases. Hence the attribute values, that is, strength of security protection may vary when service is offered in a home or visiting network.

The example in Figure 1 illustrates Security Service Level Agreement (S-SLA) negotiation between home and visiting operators (HPLMN 102 and VPLMNs 104a-104n) and between an operator (HPLMN 102) and enterprises 106a-106n. Figure 1 illustrates how PLMN specific unified enterprise security attributes are negotiated between PLMNs':
- S-SLA negotiation between the HPLMN 102 and enterprises 106a-106n where CSP in HPLMN 102 converts different enterprise S-SLA requirements (S-SLA 1 - S-SLA N) into a consistent unified S-SLA, e.g., common enterprise S-SLA 114 offered to the enterprises 106a-106n.
- The HPLMN 102 negotiates with different VPLMNs 104a-104n (CSPs) the security service level that can be achieved between the VPLMNs 104a-104n or in roaming situations, or the security service level that each of the VPLMNs 104a-104n is capable of providing in roaming situations. The security service level request is based on HPLMN requirements. The HPLMN 102 creates, based on the capability information received from VPLMNs, a common security baseline capability template S-SLA 112.
- The HPLMN 102 has, based on its own security risk assessment and ambition level, its own network specific security requirements that are applied to the HPLMN network and services the HPLMN 102 offers.
- As a result of the negotiations between the HPLMN 102 and the enterprises 106a-106n and the negotiations between the HPLMN 102 and the VPLMNs 104a-104n, the HPLMN 102 understands the security capabilities available from the different VPLMNs 104a-104n and on the other hand security capabilities required to provide services to the enterprises 106a-106n according to the S-SLA's 112 and 114. The HPLMN 102 perform security capability mapping or capability mapping 116 between the common security baseline capability template S-SLA 112 and the common enterprise S-SLA 114. Based on the capability mapping 116, the HPLMN 102 determines whether security requirements can be fulfilled with the common security baseline capability template S-SLA 112 or if there is need for a service specific S-SLA or service specific roaming S-SLA.
- As a result, end-to-end compliance monitoring is performed for the HPLMN/VPLMN and enterprise S-SLA's.

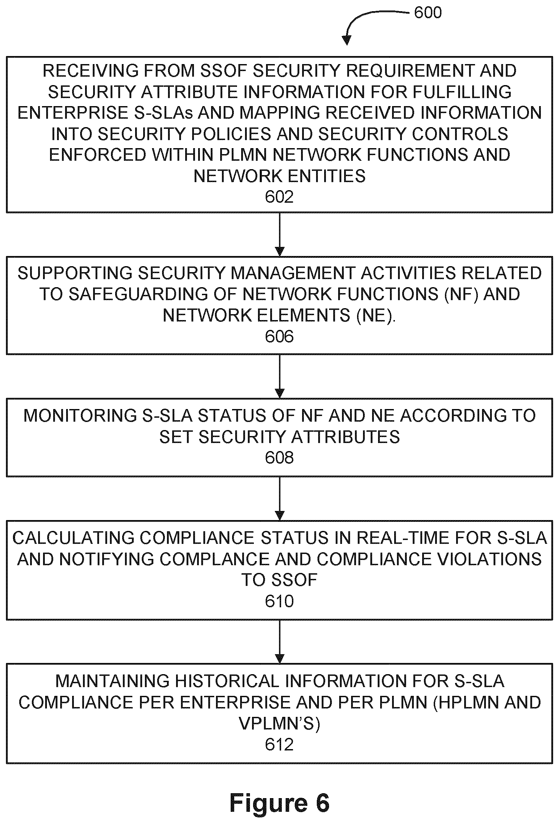

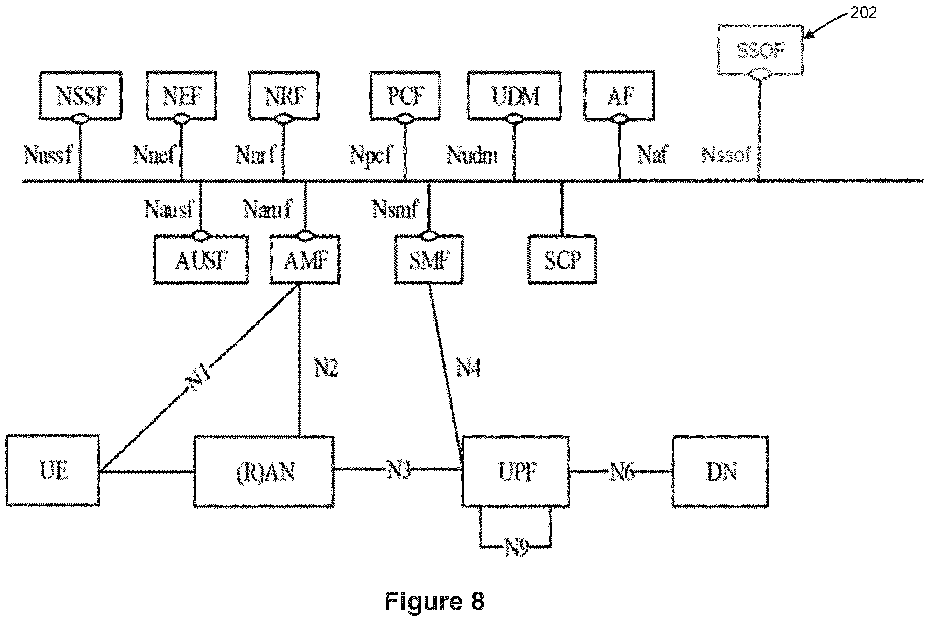

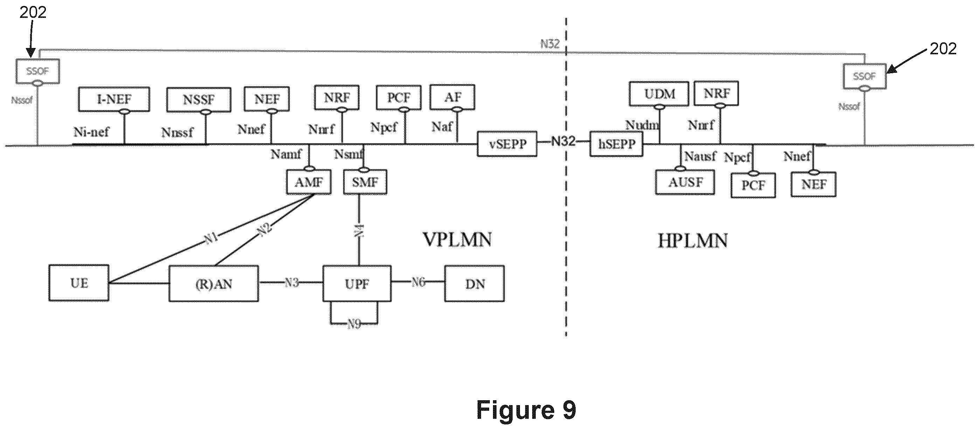

Figure 2 is a block diagram of an example of a security service orchestrator 200 and security management module 204 according to some embodiments of inventive concepts. In the example in Figure 2, the security service orchestrator 200 includes the SSOF 202. Also, in the example in Figure 2, the security service orchestrator 200 is shown as a component of the HPLMN 102. In other examples, the security service orchestrator 200 and/or SSOF 202 are a separate component associated with the HPLMN 102. In other examples, e.g., the example in Figure 8, each VPLMN 104a-104n also includes a SSOF 202. The security management module 204 includes supporting security management functions 206. Examples of operations or functions of the supporting security management functions 206 will be described with reference to Figures 6 and 9. The SSOF 202 includes a northbound interface, Nssof reference point 208, used for S-SLA negotiation with the enterprises 106a-106n and other PLMNs or VPLMNs 104a-104n and exchanging information on S-SLA security attributes. As illustrated in the example in Figure 2, the SSOF 202 includes an Nssof reference point 208a configured to interface with each VPLMN 104a-104n for negotiation and exchanging information on S-SLA security attributes and another Nssof reference point 208b configured to interface with each enterprise 106a-106n for negotiation and exchanging information on S-SLA security attributes. The SSOF 202 also includes a southbound interface 210 for interacting with the supporting security management functions 206. Information on the consistent and unified S-SLA or common enterprise S-SLA 110 and respective security attributes are transferred between the HPLMN 102 and the enterprises 106a-106n over the Nssof reference point.
208b. Information on the common security baseline capability template S-SLA 112 and respective security attributes are transferred between the HPLMN 102 and the VPLMNs 104a-104n over the Nssof reference point 208a. The Nssof reference point 208a includes interfaces Nssof_S-SLAOrchestrationCSP and Nssof_S-SLAComplianceCSP. The Nssof reference point 208b includes with interfaces Nssof_EnterpriseS-SLAOrchestration and Nssof_EnterpriseS-SLACompliance. The following NF services are specified for the SSOF 202 as illustrated in Figure 2:

| Service name | Description |
|---|---|
| Nssof_EnterpriseS-SLAOrchestration | Used for being informed about the negotiable security attributes for non-roaming and roaming cases between Home Network Operator and Enterprises |
| Nssof_EnterpriseS-SLACompliance | Used for being informed about compliance status and compliance violations for the agreed security policies and attributes for roaming cases between Home Network Operator and Enterprises |
| Nssof_S-SLAOrchestrationCSP | Used for being informed and to negotiate security attributes between HLPMN and VPLMN operators |
| Nssof_S-SLAComplianceCSP | Used for being informed about compliance status and compliance violations for the agreed security attributes for roaming case between HPLMN and VPLMN operators |

Figure 3 is a block diagram of an example of a computing device according to some embodiments of inventive concepts. In accordance with some examples, as previously described, the HPLMN 102 includes a computing device 300 and each of the VPLMNs 104a-104n include a computing device 301. Additionally, in some examples, each of the enterprises 106a-106n include a computing device 302. In the example in Figure 3, the computing devices 300, 301 and 302 are shown as being the same and including the same components; however, in other examples, the computing devices 300, 301 and 302 may include different components. The embodiment shown in Figure 3 includes exemplary components for performing the inventive concepts described herein. The exemplary computing device 300, 301 or 302 includes processing circuitry 303, a memory 305 and a network interface circuitry 307. The processing circuitry 303 may control network interface circuitry 307 to transmit communications through network interface circuitry 307 to one or more network nodes of VPLMNs 104a-104n or enterprises 106a-106n in the example in Figure 1 and/or to receive communications through the network interface circuitry 307 from one or more network nodes of VPLMNs 104a-104n or enterprises 106a-106n to perform the inventive concepts described herein. Moreover, modules may be stored in memory 305, and these modules may provide instructions so that when instructions of a module are executed by processing circuitry 303, processing circuitry 303 performs respective operations. In some examples, the memory 305 coupled with the processing circuitry 303 includes instructions that when executed by the processing circuitry 305 causes the computing device 300 or 301 to perform at least some of the functions of the methods described herein. In some examples, the methods described herein performed by the SSOF 202 and the supporting security management functions 206 are embodied in and performed by one or more computing devices that are the same or similar to computing device 300 or 301. For example, the SSOF 202 and the supporting security management function 206 are embodied on the same computing device 300 or 301 or separate computing devices 300 or 301.

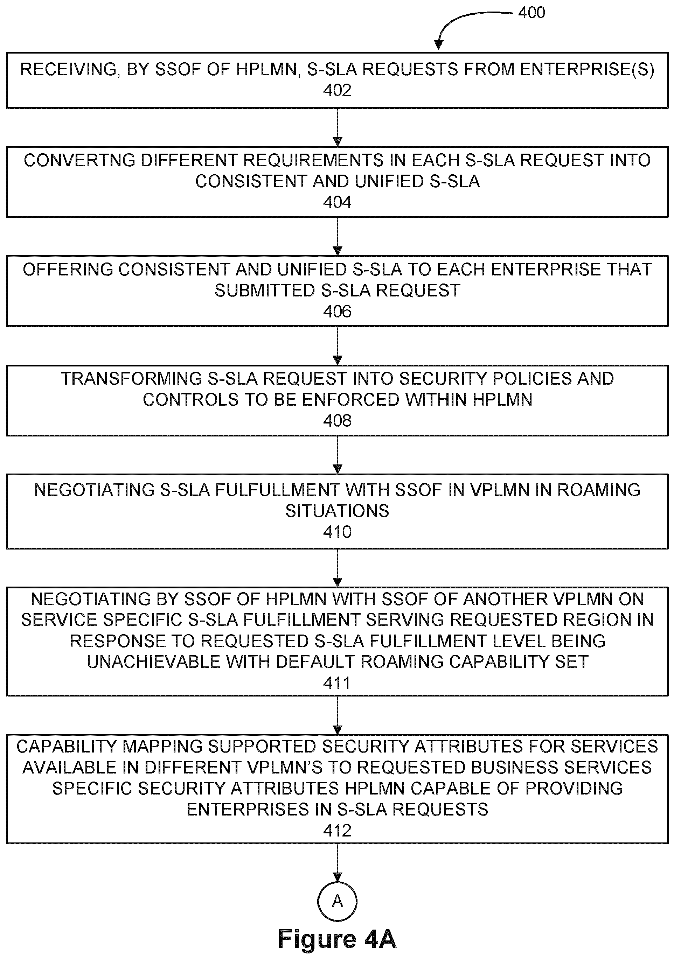

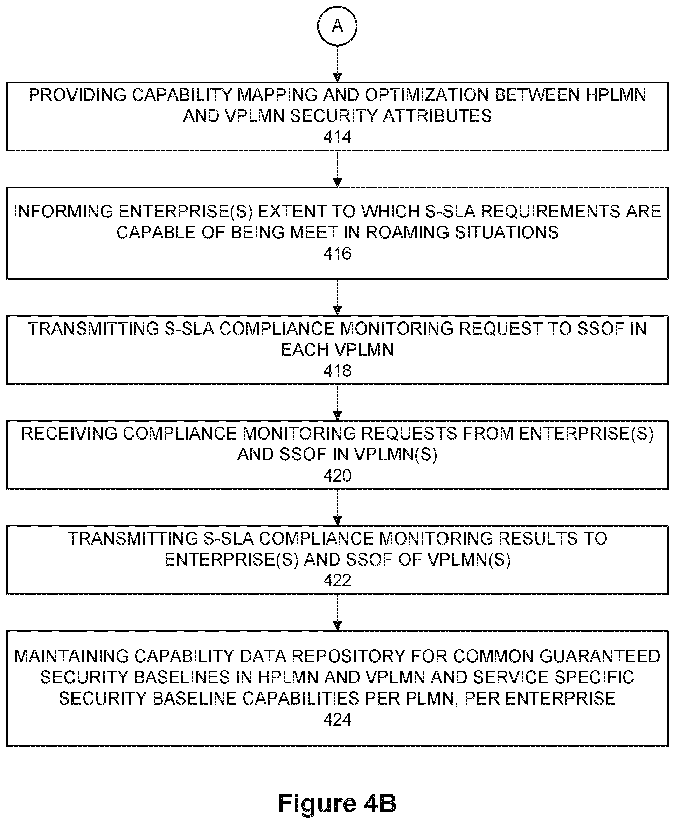

Figures 4A-4B are a flow chart of an example of a method 400 of operation of a SSOF in a HPLMN according to some embodiments of inventive concepts. The method 400 is implemented by a security service orchestration function (SSOF), such as SSOF 202 in Figure 2, in a communication infrastructure, that includes a plurality of public land mobile networks (PLMNs), e.g., HPLMN 102 and VPLMNs 104a-104n, and a plurality of enterprises, e.g., 106a-106n, for orchestration of a security service level agreement (S-SLA), such as common enterprise S-SLA 114 and/or common security baseline capability template S-SLA 112. The Security Service Orchestration Function (SSOF) is the primary security orchestration function communicating with other PLMNs or VPLMNs 104a-104n, enterprises 106a-106n and other 3GPP network functions and network entities within the HLPMN 102 supporting security service level agreement negotiation based on the security attributes. The objective of the SSOF 202 is to ensure consistency of security policies in both non-roaming and roaming situations. The described mechanism can be applied to privacy attributes in a similar way. The method 400 includes the core functionality of an SSOF in a HPLMN, such as SSOF 202 in HPLMN 102, according to some embodiments of inventive concepts.

In block 402, the method 400 includes receiving, by a SSOF in a home public land mobile network (HPLMN), a S-SLA request from one or more of the plurality of enterprises. Each of the enterprises serves a plurality of end users. Each S-SLA request includes a plurality of requirements or enterprise S-SLA requirements. The HPLMN corresponds to one of a plurality of PLMNs. The S-SLA request from each enterprise may include different enterprise S-SLA requirements.

In block 404, the method 400 includes converting each S-SLA request including different enterprise S-SLA requirements into a consistent and unified S-SLA offerable to each enterprise. The consistent and unified S-SLA includes security attributes that the HPLMN is capable of providing each of the enterprises.

In block 406, the method 400 includes offering the consistent and unified S-SLA to each enterprise that submitted the S-SLA request.

In block 408, the method 400 includes transforming each S-SLA request from the one or more enterprises into security policies and controls to be enforced within the HPLMN.

In block 410, the method 400 includes negotiating, by the SSOF in the HPLMN, fulfillment of the consistent and unified S-SLA with a SSOF in a visited public land mobile network (VPLMN) in roaming situations.

In block 411, the method 400 includes negotiating, by the SSOF in the HPLMN with a SSOF in another VPLMN, service specific S-SLA fulfillment in response to a requested S-SLA fulfillment being unachievable with the consistent and unified S-SLA.

In block 412, the method 400 includes capability mapping of supported security attributes for business services available in different VPLMNs to requested business services specific security attributes that the HPLMN is capable of providing the enterprises in their S-SLA requests.

In block 414, the method 400 includes providing capability mapping and optimization between HPLMN and VPLMN security attributes. In some examples, optimization is based on the capability mapping where the highest possible common security attribute set between different VPLMNs and the HPLMN for the different services are agreed in advance in the negotiation without having to negotiate attributes for each service request separately.

In block 416, the method 400 includes informing each enterprise of an extent to which the S-SLA requirements are capable of being met in roaming situations.

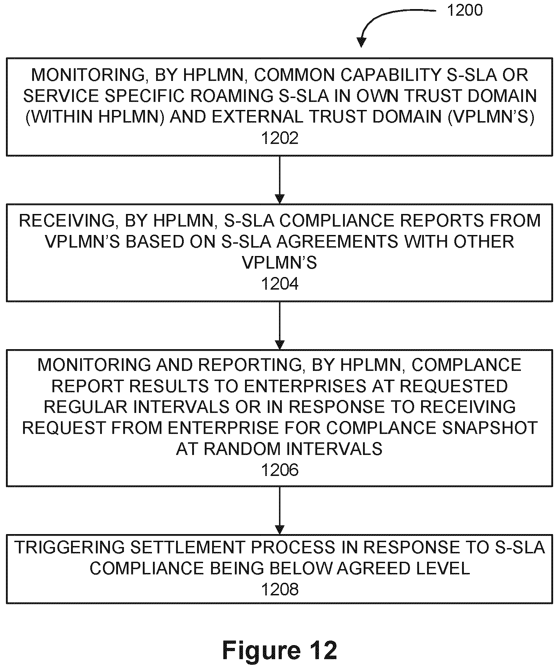

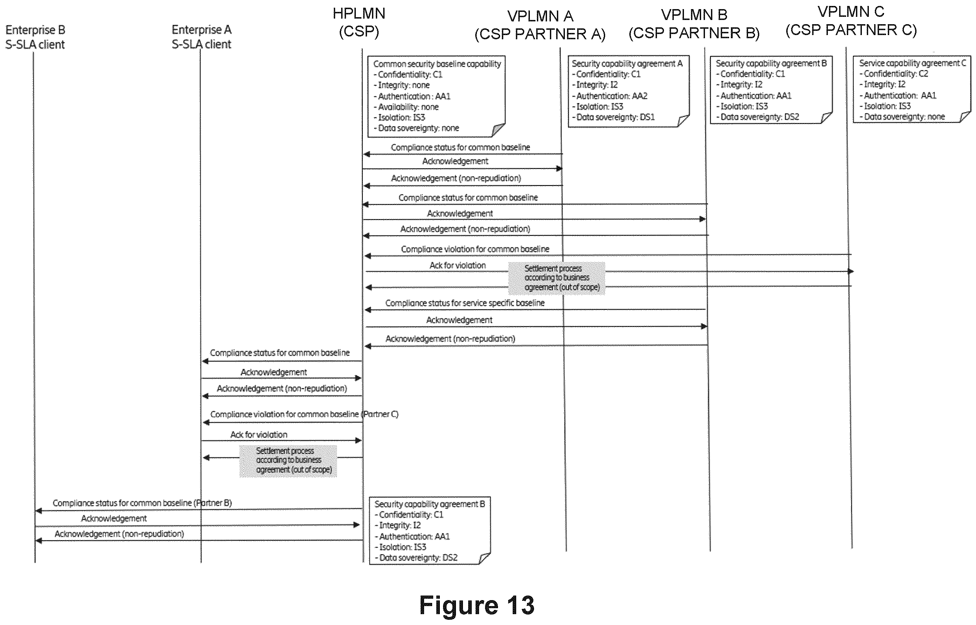

In block 418, the method 400 includes transmitting an S-SLA compliance monitoring request to the SSOF in each VPLMN. In some examples, S-SLA compliance monitoring results are normally sent by the VPLMNs at regular intervals without explicitly requesting the compliance monitoring results. An example of a method for monitoring for S-SLA fulfillment or compliance according to some embodiments of inventive concepts is described with reference to Figures 12 and 13.

In block 420, the method 400 includes receiving compliance monitoring requests from one or more enterprises and/or the SSOF in one or more VPLMNs.

In block 422, the method 400 includes transmitting an S-SLA compliance monitoring result to each enterprise and each SSOF from which the compliance monitoring request was received.

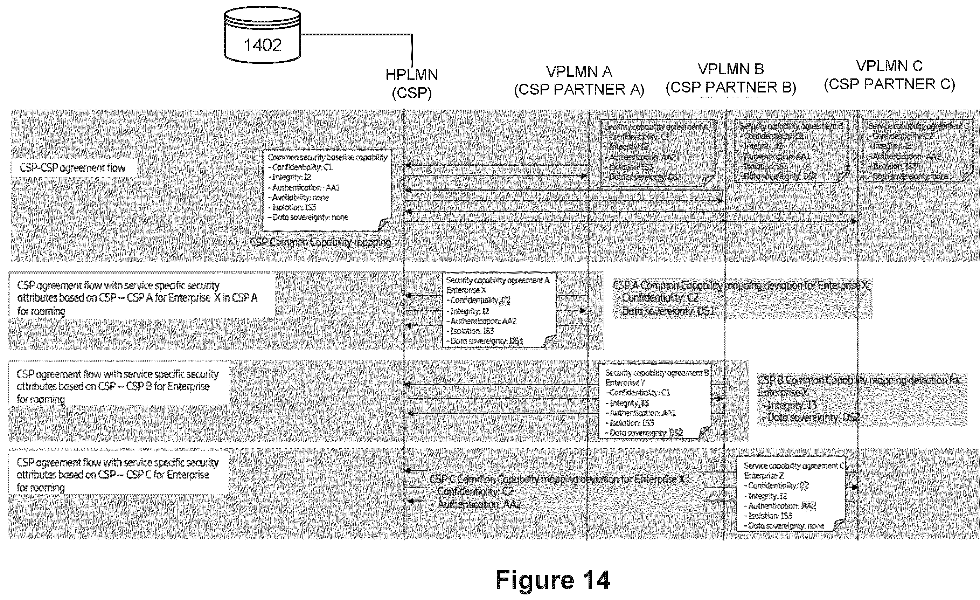

In block 424, the method 400 includes maintaining a capability mapping data repository 1402 (Figure 14) for common guaranteed security baselines in the HPLMN, the VPLMN, and service specific security baseline capabilities per PLMN and per enterprise.

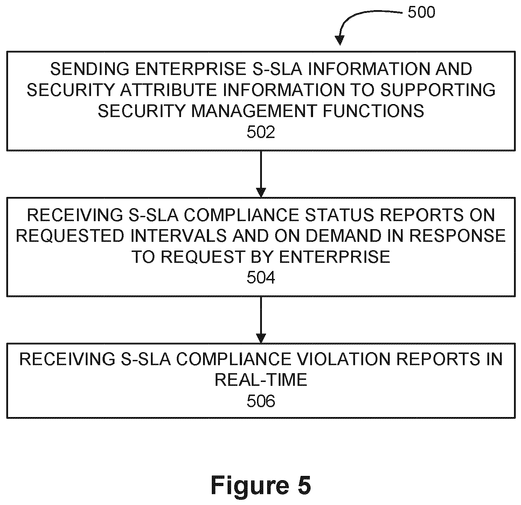

Figure 5 is a flow chart of an example of a method 500 of operation of a SSOF 202 in a HPLMN 102 interacting with supporting security management functions 206 according to some embodiments of inventive concepts. The SSOF 202 in the HPLMN 102 interacts with supporting security management functions 206 to perform a set of functions as indicated by the method 500. In block 502, the method 500 includes sending S-SLA information and security attribute information associated with a particular enterprise to the supporting security management functions, e.g., the support security management functions 206 in Figure 2. In block 504, the method 500 includes receiving S-SLA compliance status reports on requested intervals and on demand in response to a request from the particular enterprise. In block 506, the method 500 includes receiving S-SLA compliance violation reports in real-time. The SSOF can interact with other network functions and network services directly or indirectly.

Figure 6 is a flow chart of an example of a method 600 of operation of supporting security management functions according to some embodiments of inventive concepts. In some examples, the supporting security management functions include at least one of the functions of blocks 602-612 in Figure 6. As illustrated in Figure 2, there are supporting security management functions 206 that provide information to the SSOF 202 of the HPLMN 102, and which receive information and action requests from the SSOF 202. The supporting security management functions provide typically the type of supporting functions described in the method 600; however, the security management functions are not limited to those in the method 600.

In block 602, the method 600 includes receiving from the SSOF in the HPLMN, security requirement and security attribute information for fulfilling the S-SLA of each enterprise and mapping the security requirement and security attribute information into security policies and security controls for enforcement within the HPLMN network functions and network entities.

In block 606, the method 600 includes supporting security management activities related to safeguarding of the HPLMN network functions (NF) and the network elements (NE) as agreed in S-SLA's with each VPLMN.

In block 608, the method 600 includes monitoring S-SLA status of NF and NE according to set security attributes.

In block 610, the method 600 includes calculating compliance status in real-time for the S-SLA of each enterprise and notifying compliance scores and compliance violations to the SSOF in the HPLMN.

In block 612, the method 600 includes maintaining historical information for S-SLA compliance per enterprise and per PLMN.

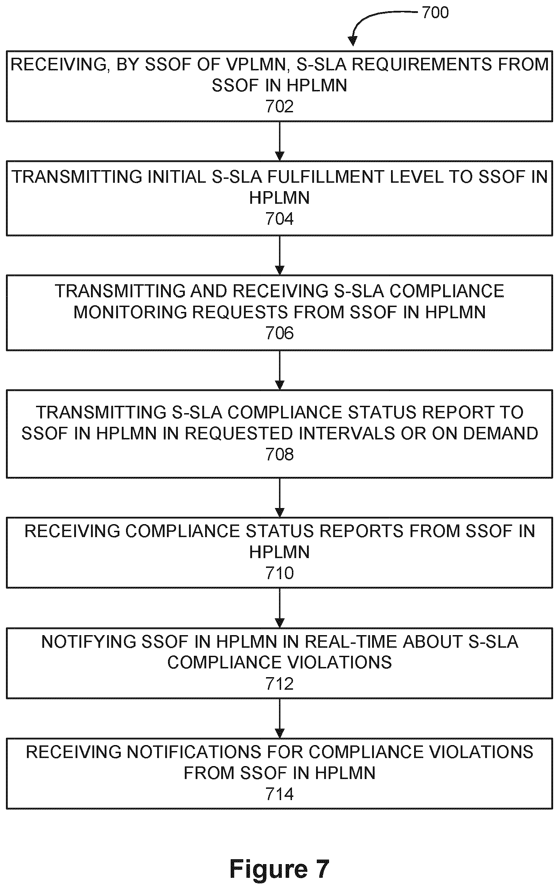

Figure 7 is a flow chart of an example of a method 700 of operation of a SSOF in a VPLMN according to some embodiments of inventive concepts. The method 700 is implemented by a security service orchestration function (SSOF) in a communication infrastructure, that includes a plurality of public land mobile networks (PLMNs) and a plurality of enterprises, for orchestration of a security service level agreement (S-SLA). In accordance with some examples, the communication infrastructure corresponds to the communications system 100 in Figure 1. The plurality of PLMNs include a HPLMN 102 and a plurality of other PLMNs or VPLMNs 104a-104b. The plurality of enterprises include enterprises 106a-106n.

In block 702, the method 700 includes receiving, by a SSOF in a visited public land mobile network (VPLMN), S-SLA requirements from a SSOF in a home public land mobile network (HPLMN).

In block 704, the method 700 includes transmitting, by the SSOF of the VPLMN, an initial S-SLA fulfillment level to the SSOF in the HPLMN in response to receiving the S-SLA requirements.

In block 706, the method 700 includes receiving, by the SSOF of the VPLMN, a S-SLA compliance monitoring request from the SSOF in the HPLMN. The method 700 in block 706 also includes transmitting, by the SSOF of the VPLMN, another S-SLA monitoring request to the SSOF in the HPLMN.

In block 708, the method 700 includes transmitting, by the SSOF of the VPLMN, a S-SLA compliance status report to the SSOF in the HPLMN in response to receiving the S-SLA compliance monitoring request and/or in requested intervals.

In block 710, the method 700 includes receiving, by the SSOF of the VPLMN, a S-SLA compliance status report from the SSOF in the HPLMN in response to transmitting the S-SLA compliance monitoring request by the SSOF of the VPLMN.

In block 712, the method 700 includes notifying the SSOF in the HPLMN in real-time about any S-SLA compliance violations.

In block 714, the method 700 includes receiving a notification for any S-SLA compliance violations from the SSOF in the HPLMN.

Figure 8 is an example of a SSOF in a 3GPP 5G non-roaming architecture according to some embodiments of inventive concepts. Figure 9 is an example of a SSOF in a 3GPP 5G roaming architecture according to some embodiments of inventive concepts. In the roaming architecture in Figure 9, N32 interface is configured for communication between a HPLMN and a VPLMN. As shown in Figure 9, the SSOF 202 in the HPLMN interacts directly with the SSOF 202 in VPLMN. According to 5G system architecture principles, the SSOF 202 can interact with other NF and its network function services directly or indirectly via a service communication proxy if required. As previously described, the SSOF introduces a new service-based interface Nssof used towards VPLMNs and enterprises for the purposes of negotiating the security service level agreements and exchanging information on the S-SLA security attributes.

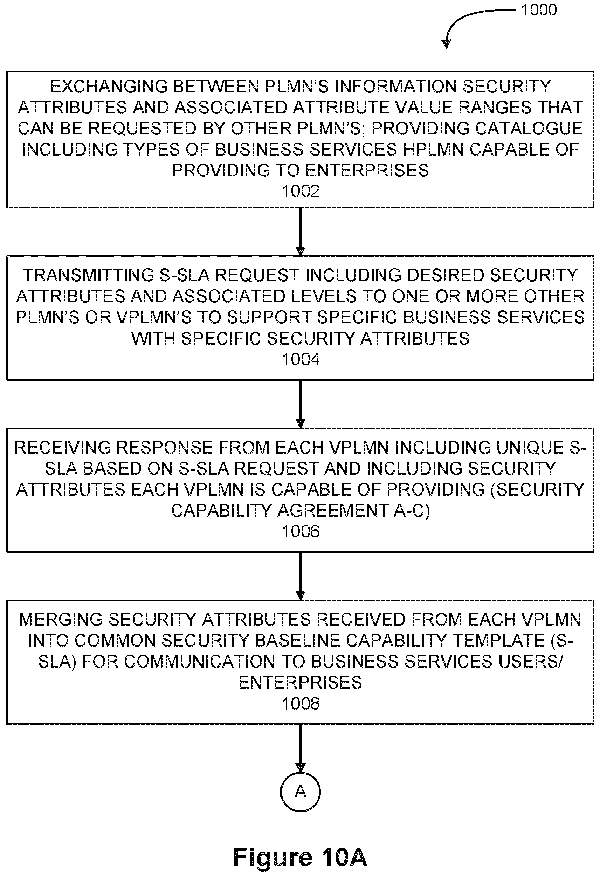

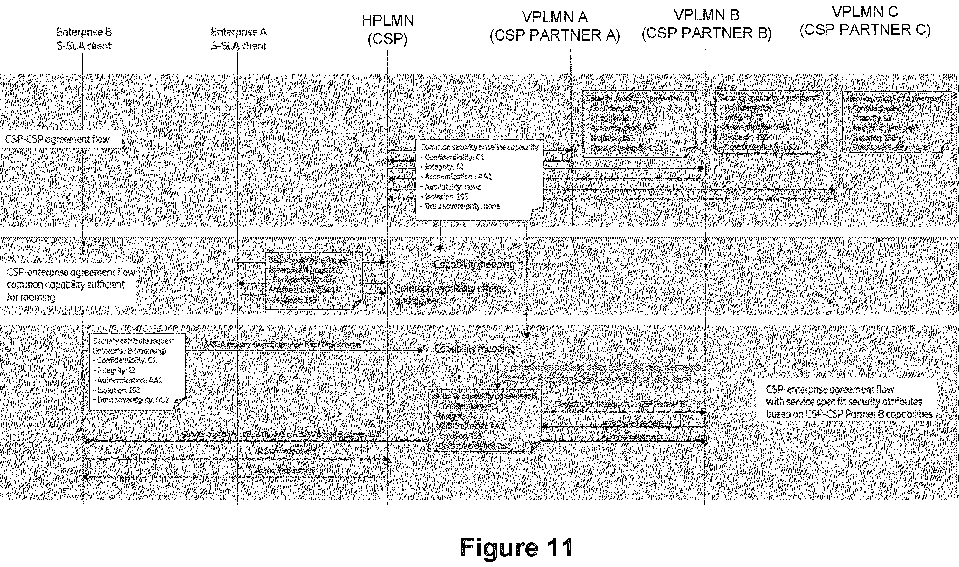

Figures 10A-10C are a flow chart of an example of a method 1000 of operation of a SSOF according to some embodiments of inventive concepts. The method 1000 is implemented by a security service orchestration function (SSOF) in a communication infrastructure, that includes a plurality of public land mobile networks (PLMNs) and a plurality of enterprises, for orchestration of a security service level agreement (S-SLA). In accordance with some examples, the SSOF is performed by the SSOF 202 in Figure 2 of the HPLMN 102. The plurality of PLMNs include the HPLMN 102 and VPLMNs 104a-104n in the example in Figure 1 and the plurality of enterprises include the enterprises 106a-106n. Referring also to Figure 11, Figure 11 is an illustration of an example of an agreement flow for negotiation of S-SLA's corresponding to the exemplary method in Figures 10A-10C according to some embodiments of inventive concepts. Figure 11 illustrates messages transmitted between the HPLMN and VPLMNs and between the HPLMN and enterprises for negotiation of S-SLA's between the entities.

In block 1002, the method 1000 includes exchanging between the PLMNs (HPLMN 102 and VPLMNs 104a-104n) information security attributes and associated attribute value ranges that each PLMN can request from the other PLMNs. The method 1000 also includes providing, by the HPLMN, a catalogue to each enterprise of the plurality of enterprises serviced by the HPLMN. The catalogue includes types of business services the HPLMN is capable of providing and that the enterprises can request from the HPLMN.

In block 1004, the method 1000 includes transmitting, by the home public land mobile network (HPLMN) of the plurality of PLMNs, a S-SLA request to one or more visited public land mobile networks (VPLMNs) of the plurality of PLMNs to support specific business services with specific security attributes.

In block 1006, the method 1000 includes receiving a response from each VPLMN including a unique S-SLA (security capability agreements A-C in Figure 11) including security attributes the VPLMN is capable of providing and based on the S-SLA request.

In block 1008, the method 1000 includes merging the security attributes received from each VPLMN into a common security baseline capability template S-SLA (e.g., common security baseline capability template S-SLA 112 in Figure 1) for communication to business services users or each of the enterprises.

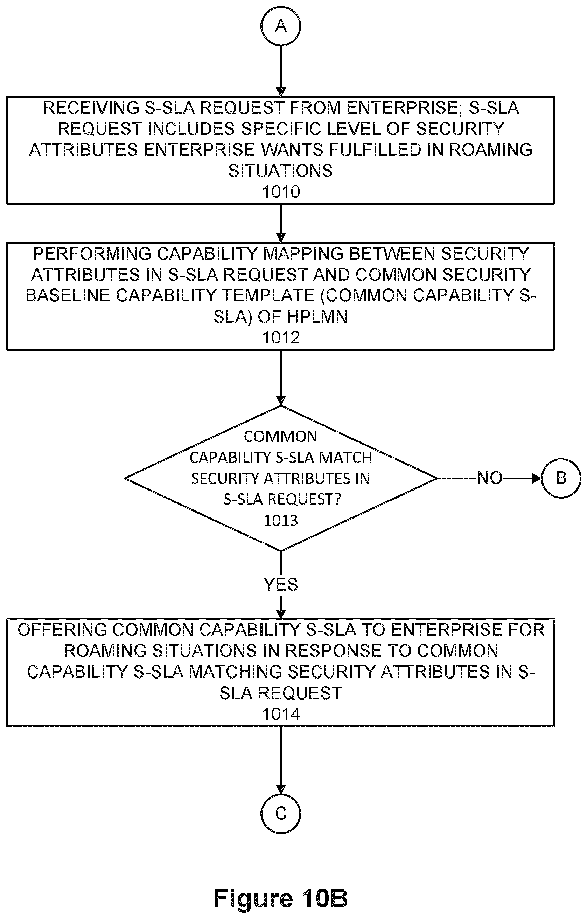

In block 1010 (Figure 10B), the method 1000 includes receiving, by the HPLMN, an enterprise S-SLA request from a requesting enterprise of the plurality of enterprises. The enterprise S-SLA request includes a specific level of security attributes the requesting enterprise wants fulfilled in roaming situations.

In block 1012, the method 1000 includes performing capability mapping between the security attributes in the enterprise S-SLA request and the common security baseline capability template S-SLA of the HPLMN. The common security baseline capability template S-SLA defines a common capability S-SLA (e.g., common enterprise S-SLA 114) offerable by the HPLMN to the enterprises.

In block 1013, the method 1000 includes determining whether the common capability S-SLA matches the security attributes in the S-SLA request in response to the capability mapping. If the common capability S-SLA matches the security attributed in the S-SLA request, the method 1000 advances to block 1014. If the common capability S-SLA does not match the security attributes in the S-SLA request, the method 1000 advances to block 1016.

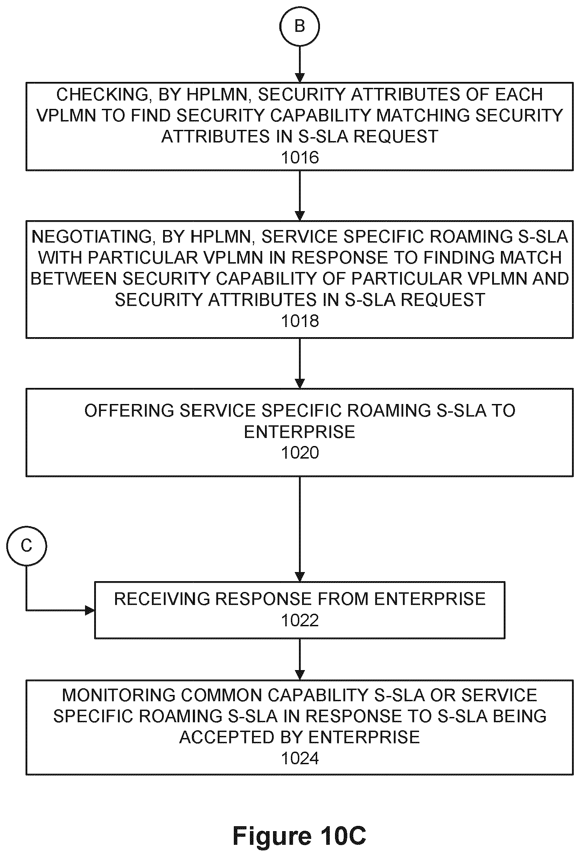

In block 1014, the method 1000 includes offering the common capability S-SLA to the requesting enterprise for roaming situations in response to the common security baseline capability template S-SLA matching the security attributes in the enterprise S-SLA request. The method 1000 advances to block 1022 (Figure 10C) in response to offering the common capability S-SLA to the requesting enterprise for roaming. In block 1022, the method 1000 includes receiving a response from the requesting enterprise. The response includes an acceptance or a decline of the common capability S-SLA.

In block 1016 (Figure 10C), the method 1000 includes checking, by the HPLMN or SSOF of the HPLMN, security attributes of each VPLMN to find a security capability matching the security attributes in the enterprise S-SLA request in response to the common security baseline capability template S-SLA not matching the security attributes in the enterprise S-SLA request.

In block 1018, the method 1000 includes negotiating a service specific roaming S-SLA with a particular VPLMN in response to finding a match between the security capability of the particular VPLMN and the security attributes in the enterprise S-SLA request.

In block 1020, the method 1000 includes offering the service specific roaming S-SLA to the requesting enterprise in response to negotiating the service specific roaming S-SLA with the particular VPLMN.

In block 1022, the method 1000 includes receiving a response from the requesting enterprise. The response including an acceptance or a decline of the service specific S-SLA.

The method 1000 is repeated per enterprise, per service and per trust domain.

In block 1024, the method 1000 includes monitoring the common capability S-SLA or the service specific roaming S-SLA for compliance in response to being accepted by the requesting enterprise. An example of a method for monitoring the common capability S-SLA or the service specific roaming S-SLA for compliance will be described with reference to Figures 12 and 13.

Figure 11 is an illustration of an example of an agreement flow between a HPLMN and VPLMNs and between the HPLMN and enterprises for negotiation of S-SLA's corresponding to the exemplary method in Figures 10A-10C according to some embodiments of inventive concepts. The example in Figure 11 illustrated the end-to-end S-SLA negotiation between different PLMNs (CSPs) and enterprises for roaming situations in Figure 1.

As previously described with respect to block 1002 in Figure 10A, at an initialization state the PLMNs exchange information security attributes with attribute value ranges that can be requested by other PLMNs. At the initialization state the HPLMN provides to its enterprises or enterprise customers a catalogue for different types of business services the enterprises can request from the HPLMN and a catalogue of security attributes with attribute value ranges that can be requested from the HPLMN. The communications for end-to-end agreement flow is illustrated in Figure 11. The illustrated flow from the PLMN perspective is applied into a 3GPP roaming situation.

The HPLMN sends S-SLA requests to other VPLMNs including all security attributes. Based on the negotiation scheme, the HPLMN formulates a common security baseline capability template S-SLA which is used as a default offering in roaming situations.

At reception of a S-SLA request from an enterprise, the HPLMN performs capability mapping between HPLMN the common security baseline capacity and enterprise S-SLA requested attributes. If the common capability can fulfil the enterprise needs, the common enterprise S-SLA is offered to the enterprise to be used for roaming situations. If the common security baseline capability cannot fulfill the enterprise requirements, HPLMN checks the attributes of partner VPLMNs. When the HPLMN finds a matching partner capability, the HPLMN negotiates a service specific roaming S-SLA and offers that service specific capability to the enterprise.

The HPLMN can repeat and apply the same procedure per enterprise, per service and per trust domain. The enterprise can always decline the HPLMN offer. Accepted offers enter a monitoring mode by the HPLMN automatically.

Examples of information elements (objects) contained in a S-SLA initial request are presented in the table below.

| Information element | Description | Category |
|---|---|---|
| Target enterprise identifier | Indicates enterprise that requests the S-SLA fulfillment | Mandatory for CSP-enterprise flow |
| Target enterprise user | Indicates enterprise users that S-SLA fulfillment shall apply to | Optional |
| Target CSP identifier | Indicates specific CSPs that fulfill the S-SLA in roaming situations | Mandatory for CSP-CSP flow |
| Confidentiality attributes | Defines the confidentiality related security attributes to be fulfilled | Optional |
| Target integrity attributes | Defines the integrity related security attributes to be fulfilled | Optional |
| Target authentication attributes | Defines the authentication related security attributes to be fulfilled | Optional |
| Target non-repudiation attributes | Defines the non-repudiation related security attributes to be fulfilled | Optional |
| Target availability attributes | Defines the availability related security attributes to be fulfilled | Optional |
| Target isolation attributes | Defines the isolation related security attributes to be fulfilled | Optional |
| Target data sovereignty attributes | Defines the data sovereignty related security attributes to be fulfilled | Optional |
| Validity condition | Indicates that S-SLA applies only to the specific locations or area of interest | Optional |
| Temporal validity conditions | Time interval for periodic S-SLA re-registration or handshake | Optional |
| Subscription of S-SLA compliance monitoring events | Defines the regular interval for compliance notifications | Optional |
| Allowed IP-domains | Indicates which IP-domains are allowed for data to be passed through without extra protection | Optional |
| Extra data protection controls | Indicates which extra data protection options are required if there are no available routing options only within allowed IP-domains | Optional |

Figure 12 is a flow chart of an example of a method 1200 for monitoring for S-SLA fulfillment or compliance according to some embodiments of inventive concepts. Referring also to Figure 13, Figure 13 is an illustration of an example of a monitoring flow for S-SLA fulfillment or compliance corresponding to the exemplary method in Figure 12 according to some embodiments of inventive concepts. Figure 13 illustrates an example of message flows between the HPLMN and the VPLMNs and between the HPLMN and the enterprises for end-to-end monitoring of S-SLA compliance. In some examples, the method 1200 is used to perform the monitoring in block 1024 in Figure 10C.

In block 1202, the method 1200 includes monitoring, by a HPLMN, the common capability S-SLA or service specific roaming S-SLA in the HPLMN's own trust domain and external trust domains of the VPLMNs. In monitoring either the common capability S-SLA or the service specific roaming S-SLA, the HPLMN monitors the agreed security attributes for different services within the HPLMN's own trust domain and HPLMN's external trust domain.

In block 1204, the method 1200 includes receiving by the HPLMN, S-SLA compliance reports from VPLMNs based on the S-SLA agreements with the VPLMNs.

In block 1206, the method 1200 includes monitoring and reporting, by the HPLMN, compliance report results to the enterprises at requested regular intervals or in response to receiving a request from an enterprise for a compliance snapshot at random intervals, e.g., for auditing purposes.

In block 1208, the method 1200 includes triggering a settlement process in response to S-SLA compliance being below an agreed level according to the S-SLA or business agreement between the HPLMN and a particular enterprise.

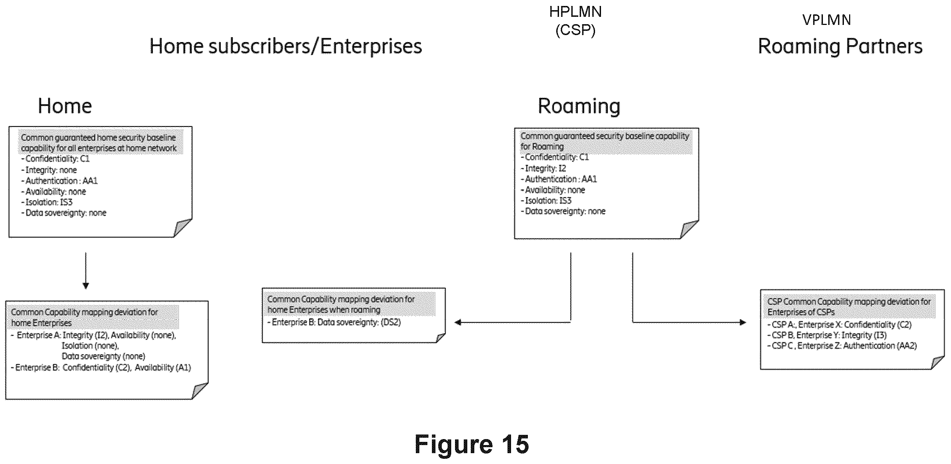

Figure 14 is an illustration of an example of capability mapping from a HPLMN perspective according to some embodiments of inventive concepts. In some examples, the capability mapping illustrated in Figure 14 is used for the capability mapping in block 412 of Figure 4A and block 1012 in Figure 10B. The example in Figure 14 illustrates an end-to-end S-SLA capability mapping flow from a perspective of the HPLMN, where the HPLMN has a variety of S-SLA agreements in place for roaming situations. The HPLMN needs to check automatically and dynamically from a capability mapping data repository 1402 whether to apply common security baseline capability mapping for a roaming enterprise user or whether to apply enterprise service specific security capabilities for a roaming enterprise user. As a result of capability mapping, the SSOF 202 and supporting security management functions 206 (Figure 2) manage automatically and dynamically capabilities for both HPLMN and for VPLMN roaming situations as shown in the example in Figure 15. Figure 15 is an illustration of an example of capability mapping management for a HPLMN according to some embodiments of inventive concepts. The HPLMN has common guaranteed capability mapping applicable for HPLMN users and enterprise service specific capability mappings. These can be dynamically updated and adjusted based on the requests the HPLMN receives from the enterprises. The HPLMN maintains in a similar way common guaranteed capability mapping applicable for all roaming users and separate capability mappings per enterprise and per service for roaming situations.

Additional explanation is provided below.

The Security Service Orchestrator Function described herein includes one or more of the following features:
- Embedding security specific orchestration capabilities into 5G and next generation service-based architecture in order to solve security concerns related to the deployment and configuration of the technology.
- Introducing SSOF function to exchange security related information according to 3GPP SBA principles.
- Coverage of security attributes is expanded from CIA to also address isolation, data sovereignty and MNO interworking.
- Support for different security attributes and security capabilities for non-roaming and roaming cases.
- Dynamic, common, and consistent S-SLA negotiation and handshake for PLMNs and enterprises.
- Dynamic and optimized security capability mapping for roaming enterprise users to offer either common security baseline capabilities or service specific security capabilities.
- Informing enterprises to which extent S-SLA requirements are possible to meet in roaming situations.
- Real-time S-SLA compliance monitoring for S-SLA fulfillment for PLMNs and enterprises.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components, or functions but does not preclude the presence or addition of one or more other features, integers, elements, steps, components, functions, or groups thereof. Furthermore, as used herein, the common abbreviation "e.g.," which derives from the Latin phrase "exempli gratia," may be used to introduce or specify a general example or examples of a previously mentioned item, and is not intended to be limiting of such item. The common abbreviation "i.e.," which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).

| Abbreviation | Explanation |
|---|---|
| AAA | Authentication, Authorization, Accounting |
| AES | Advanced Encryption Standard |
| CIA | Confidentiality, Integrity, Availability |
| CSP | Communications service provider |
| DSA | Digital Signature Standard |
| ECDSA | Elliptic Curve Digital Signature Algorithm |
| NF | Network Function |
| NE | Network Entity |
| OSS | Operations Support System |
| PLMN | Public Land Mobile Network |
| PSF | Physical Security Function |
| RSA | Rivest-Shamir-Adleman Pubic-Key Cryptosystem |
| SHA | Secure Hash Algorithms |
| S-SLA | Security Service Level Agreement |
| SSOF | Security Orchestration Function |
| TDES | Triple Data Encryption Algorithm |
| VSF | Virtual Security Function |

## Claims

1. A method (400) implemented by a security service orchestration function, SSOF, (202) in a communication infrastructure, that includes a plurality of public land mobile networks, PLMNs, (102, 104) and a plurality of enterprises (106) serving a plurality of end users, for orchestration of a security service level agreement, S-SLA, the method comprising:
receiving (402), by a SSOF in a home public land mobile network, HPLMN (102), a S-SLA request from one or more of the plurality of enterprises (106a-106n), wherein each S-SLA request comprises a plurality of requirements and wherein the HPLMN (102) corresponds to one of the plurality of PLMNs and wherein each of the enterprises (106a-106n) serves a plurality of end users;
converting (404), by the SSOF in the HPLMN (102), each S-SLA request into a common enterprise S-SLA offerable to each enterprise (106a-106n), wherein the common enterprise S-SLA comprises security attributes that the HPLMN (102) is capable of providing to each of the enterprises (106a-106n);
offering (406), by the SSOF in the HPLMN (102), the common enterprise S-SLA to each enterprise (106a-106n) that submitted the S-SLA request;
transforming (408), by the SSOF in the HPLMN (102), each S-SLA request from the one or more enterprises (106a-106n) into security policies and controls to be enforced within the HPLMN (102);
transmitting (418), by the SSOF in the HPLMN (102), an S-SLA compliance monitoring request to a respective SSOF in each visited public mobile network, VPLMN (104a-104n);
negotiating (410), by the SSOF in the HPLMN (102), fulfillment of the common enterprise S-SLA with a SSOF in a VPLMN (104a), in roaming situations of the end users; and
if the requested S-SLA fulfillment being unachievable with the common enterprise S-SLA in the VPLMN (104a), negotiating (411), by the SSOF in the HPLMN (102) with a SSOF in another VPLMN (104b), service specific S-SLA fulfillment.

2. The method of claim 1, further comprising capability mapping (412) of supported security attributes for business services available in different VPLMNs (104a-104n) to requested business services specific security attributes that the HPLMN (102) is capable of providing the enterprises (106a-106n) in their S-SLA requests.

3. The method of any of claims 1-2, further comprising providing (414) capability mapping and optimization between HPLMN (102) and VPLMN (104a) security attributes.

4. The method of any of claims 1-3, further comprising informing (416) each enterprise (106a-106n) of an extent to which S-SLA requirements are capable of being met in roaming situations.

5. The method of any of claims 1-4, further comprising:
receiving (420) compliance monitoring requests from one or more enterprises (106a-106n) and the SSOF in one or more VPLMNs (104a-104n); and
transmitting (422) an S-SLA compliance monitoring result to each enterprise (106a-106n) and each SSOF from which the compliance monitoring request was received.

6. The method of any of claims 1-5, further comprising maintaining (424) a capability data repository for common guaranteed security baselines in the HPLMN (102), the VPLMN, and service specific security baseline capabilities per PLMN, per enterprise.

7. The method of any of claims 1-6, wherein the SSOF in the HPLMN (102) interacts with supporting security management functions to perform a set of functions comprising:
sending (502) S-SLA information and security attribute information associated with a particular enterprise (106a) to the supporting security management functions;
receiving (504) S-SLA compliance status reports on requested intervals and on demand in response to a request from the particular enterprise (106a); and
receiving (506) S-SLA compliance violation reports in real-time.

8. The method of claim 7, wherein the supporting security management functions comprise at least one of:
receiving (602), from the SSOF in the HPLMN (102), security requirement and security attribute information for fulfilling the S-SLA of each enterprise (106a-106n) and mapping the security requirement and security attribute information into security policies and security controls for enforcement within the HPLMN network functions and network entities;
supporting (606) security management activities related to safeguarding of the HPLMN network functions, NF, and the network elements, NE, as agreed in S-SLA's with each VPLMN (104a-104n);
monitoring (608) S-SLA status of NF and NE according to set security attributes;
calculating (610) compliance status in real-time for the S-SLA of each enterprise (106a-106n) and notifying compliance scores and compliance violations to the SSOF in the HPLMN (102); and
maintaining (612) historical information for S-SLA compliance per enterprise and per PLMN.

9. The method of any of claims 1-8, wherein the SSOF comprises:
a northbound security service orchestration function, Nssof, reference point (208a) configured to interface with each VPLMN (104a-104n) for exchanging information on S-SLA security attributes; and
another Nssof reference point (208b) configured to interface with each enterprise (106a-106n) for exchanging information on the S-SLA security attributes.

10. A method (1000) implemented by a security service orchestration function, SSOF, in a communication infrastructure, that includes a plurality of public land mobile networks, PLMNs, and a plurality of enterprises (106a-106n), for orchestration of a security service level agreement, S-SLA, the method comprising:
transmitting (1004), by a SSOF in a home public land mobile network, HPLMN (102), of the plurality of PLMNs, a S-SLA request to one or more visited public land mobile networks, VPLMNs (104a-104n) of the plurality of PLMNs to support specific business services with specific security attributes;
receiving (1006), by the SSOF in the HPLMN (102), a response from each VPLMN (104a-104n) including a unique S-SLA including security attributes the VPLMNs (104a-104n) is capable of providing and based on the S-SLA request;
merging (1008), by the SSOF in the HPLMN (102), the security attributes received from each VPLMN (104a-104n) into a common security baseline capability template S-SLA for communication to business services users or each of the enterprises (106a-106n);
receiving (1010), by the SSOF in the HPLMN (102), an enterprise S-SLA request from a requesting enterprise (106a) of the plurality of enterprises (106a-106n), wherein the enterprise S-SLA request comprises a specific level of security attributes the requesting enterprise (106a) wants fulfilled in roaming situations;
performing (1012), by the SSOF in the HPLMN (102), capability mapping between the security attributes in the enterprise S-SLA request and the common security baseline capability template S-SLA of the HPLMN (102), wherein the common security baseline capability template S-SLA defines a common capability S-SLA offerable by the HPLMN (102);
if the common security baseline capability template S-SLA matching the security attributes in the enterprise S-SLA request,
offering (1014), by the SSOF in the HPLMN (102), the common capability S-SLA to the requesting enterprise (106a) for roaming situations; and
receiving (1022), by the SSOF in the HPLMN (102), a response from the requesting enterprise (106a), wherein the response comprises an acceptance or a decline of the common capability S-SLA;
if the common security baseline capability template S-SLA not matching the security attributes in the enterprise S-SLA request,
checking (1016), by the SSOF in the HPLMN (102), security attributes of each VPLMN (104a-104n) to find a security capability matching the security attributes in the enterprise S-SLA request;
negotiating (1018), by the SSOF in the HPLMN (102), a service specific roaming S-SLA with a particular VPLMN (104b) in response to finding a match between the security capability of the particular VPLMN (104b) and the security attributes in the enterprise S-SLA request;
offering (1020) the service specific roaming S-SLA to the requesting enterprise (106a) in response to negotiating the service specific roaming S-SLA with the VPLMN (104b); and
receiving (1022) a response from the requesting enterprise (106a), wherein the response comprises an acceptance or a decline of the service specific S-SLA..

11. The method of claim 10, further comprising exchanging (1002) between the PLMNs information security attributes and associated attribute value ranges that each PLMN can request from the other PLMNs.

12. The method of any of claims 10 or 11, further comprising providing (1002), by the SSOF in the HPLMN (102), a catalogue to each enterprise of the plurality of enterprises (106a-106n) serviced by the HPLMN (102), the catalogue comprising types of business services the HPLMN (102) is capable of providing and that the enterprises (106a-106n) can request from the HPLMN (102).

13. The method of any of claims 10-12, being repeated per enterprise, per service and per trust domain.

14. The method of any of claims 10-13, further comprising monitoring (1024) the common capability S-SLA or the service specific roaming S-SLA for compliance in response to being accepted by the requesting enterprise (106a).

15. A computing device (300) in a home public land mobile network, HPLMN (102), comprising a security service orchestration function, SSOF, of a plurality of public land mobile networks, PLMNs, the computing device comprising:
processing circuitry (303); and
memory (305) coupled with the processing circuitry, wherein the memory includes instructions that when executed by the processing circuitry causes the computing device to, transmit (1004), by a SSOF in a HPLMN (102) of the plurality of PLMNs, a S-SLA request to one or more visited public land mobile networks, VPLMNs (104a-104n) of the plurality of PLMNs to support specific business services with specific security attributes;
receive (1006), by the SSOF in the HPLMN (102), a response from each VPLMN (104a-104n) including a unique S-SLA including security attributes the VPLMN (104a-104n) is capable of providing and based on the S-SLA request; and
merge (1008), by the SSOF in the HPLMN (102), the security attributes received from each VPLMN (104a-104b) into a common security baseline capability template S-SLA for communication to business services users or each of the enterprises (106a-106n);
receive (1010), by the SSOF in the HPLMN (102), an enterprise S-SLA request from a requesting enterprise (106a) of the plurality of enterprises (106a-106n), wherein the enterprise S-SLA request comprises a specific level of security attributes the requesting enterprise wants fulfilled in roaming situations;
perform (1012), by the SSOF in the HPLMN (102), capability mapping between the security attributes in the enterprise S-SLA request and the common security baseline capability template S-SLA of the HPLMN (102), wherein the common security baseline capability template S-SLA defines a common capability S-SLA offerable by the HPLMN (102);
if the common security baseline capability template S-SLA matching the security attributes in the enterprise S-SLA request
offer (1014), by the SSOF in the HPLMN (102), the common capability S-SLA to the requesting enterprise (106a) for roaming situations;
receiving (1022), by the SSOF in the HPLMN (102), a response from the requesting enterprise (106a), wherein the response comprises an acceptance or a decline of the common capability S-SLA;
if the common security baseline capability template S-SLA not matching the security attributes in the enterprise S-SLA request,
check (1016), by the SSOF in the HPLMN (102), security attributes of each VPLMN (104a-104n) to find a security capability matching the security attributes in the enterprise S-SLA request in response to the common security baseline capability template S-SLA not matching the security attributes in the enterprise S-SLA request;
negotiate (1018), by the SSOF in the HPLMN (102), a service specific roaming S-SLA with a particular VPLMN (104b) in response to finding a match between the security capability of the particular VPLMN (104b) and the security attributes in the enterprise S-SLA request;
offering (1020) the service specific roaming S-SLA to the requesting enterprise (106a) in response to negotiating the service specific roaming S-SLA with the VPLMN (104b); and
receiving (1022) a response from the requesting enterprise (106a), wherein the response comprises an acceptance or a decline of the service specific S-SLA.

16. The computing device of claim 15, wherein the memory includes instructions that when executed by the processing circuitry causes the computing device to perform operations according to any of claims 11-14.

17. A computer program product comprising a non-transitory storage medium including program code to be executed by processing circuitry (303) of a computing device (300), whereby execution of the program code causes the computing device (300) to perform operations according to any of claims 10-13.

## Patentansprüche

1. Verfahren (400) zur Orchestrierung einer Sicherheitsdienstgütevereinbarung, S-SLA, das von einer Sicherheitsdienstorchestrierungsfunktion, SSOF, (202) in einer Kommunikationsinfrastruktur implementiert wird, die eine Mehrzahl von öffentlichen Landfunknetzwerken, PLMNs, (102, 104) und eine Mehrzahl von Unternehmen (106) umfasst, die eine Mehrzahl von Endbenutzern bedient, wobei das Verfahren Folgendes umfasst:
Empfangen (402) einer S-SLA-Abfrage von einem oder mehreren der Mehrzahl von Unternehmen (106a-106n) durch eine SSOF in einem öffentlichen Heimat-Landfunknetzwerk, HPLMN, (102), wobei jede S-SLA-Abfrage eine Mehrzahl von Anforderungen umfasst und wobei das HPLMN (102) einem der Mehrzahl von PLMNs entspricht und wobei jedes der Unternehmen (106a-106n) eine Mehrzahl von Endbenutzern bedient;
Konvertieren (404) jeder S-SLA-Abfrage durch die SSOF in dem HPLMN (102) in eine gemeinsame Unternehmens-S-SLA, die jedem Unternehmen (106a-106n) angeboten werden kann, wobei die gemeinsame Unternehmens-S-SLA Sicherheitsattribute umfasst, die das HPLMN (102) jedem der Unternehmen (106a-106n) bereitstellen kann;
Anbieten (406) der gemeinsamen Unternehmens-S-SLA durch die SSOF in dem HPLMN (102) jedem Unternehmen (106a-106n), das die S-SLA-Abfrage übermittelt hat;
Transformieren (408) jeder S-SLA-Abfrage von dem einen oder den mehreren Unternehmen (106a-106n) durch die SSOF in dem HPLMN (102) in Sicherheitsrichtlinien und -kontrollen, die innerhalb des HPLMN (102) durchgesetzt werden sollen;
Übertragen (418) einer S-SLA-Konformitätsüberwachungsabfrage durch die SSOF in dem HPLMN (102) an eine jeweilige SSOF in jedem öffentlichen Besucher-Landfunknetzwerk, VPLMN, (104a-104n);
Aushandeln (410) der Erfüllung der gemeinsamen Unternehmens-S-SLA durch die SSOF in dem HPLMN (102) mit einer SSOF in einem VPLMN (104a) in Roaming-Situationen des Endbenutzers; und,
falls die Erfüllung der angefragten S-SLA mit der gemeinsamen Unternehmens-S-SLA in dem VPLMN (104a) nicht erreicht werden kann, Aushandeln (411) der Erfüllung einer dienstspezifischen S-SLA durch die SSOF in dem HPLMN (102) mit einer SSOF in einem anderen VPLMN (104b).

2. Verfahren nach Anspruch 1, ferner umfassend Fähigkeitszuordnung (412) von unterstützten Sicherheitsattributen für Geschäftsdienste, die in verschiedenen VPLMNs (104a-104n) verfügbar sind, zu angefragten geschäftsdienstspezifischen Sicherheitsattributen, die das HPLMN (102) den Unternehmen (106a-106n) in ihren S-SLA-Abfragen bereitstellen kann.

3. Verfahren nach einem der Ansprüche 1-2, ferner umfassend Bereitstellen (414) von Fähigkeitszuordnung und Optimierung zwischen Sicherheitsattributen des HPLMN (102) und des VPLMN (104a).

4. Verfahren nach einem der Ansprüche 1-3, ferner umfassend Informieren (416) jedes Unternehmens (106a-106n) darüber, in welchem Umfang die S-SLA-Anforderungen in Roaming-Situationen erfüllt werden können.

5. Verfahren nach einem der Ansprüche 1-4, ferner umfassend:
Empfangen (420) von Konformitätsüberwachungsabfragen von einem oder mehreren Unternehmen (106a-106n) und der SSOF in einem oder mehreren VPLMNs (104a-104n); und
Übertragen (422) eines S-SLA-Konformitätsüberwachungsergebnisses an jedes Unternehmen (106a-106n) und jede SSOF, von denen eine Konformitätsüberwachungsabfrage empfangen wurde.

6. Verfahren nach einem der Ansprüche 1-5, ferner umfassend Verwalten (424) eines Fähigkeitsdaten-Repositorys für gemeinsame garantierte Sicherheitsbasislinien in dem HPLMN (102), dem VPLMN und dienstspezifische Sicherheitsbasislinienfähigkeiten pro PLMN, pro Unternehmen.

7. Verfahren nach einem der Ansprüche 1-6, wobei die SSOF in dem HPLMN (102) mit unterstützenden Sicherheitsmanagementfunktionen interagiert, um einen Satz von Funktionen auszuführen, der Folgendes umfasst:
Senden (502) von S-SLA-Informationen und Sicherheitsattributinformationen, die mit einem spezifischen Unternehmen (106a) assoziiert sind, an die unterstützenden Sicherheitsmanagementfunktionen;
Empfangen (504) von S-SLA-Konformitätsstatusberichten in angeforderten Intervallen und auf Verlangen in Reaktion auf eine Abfrage von dem spezifischen Unternehmen (106a); und
Empfangen (506) von S-SLA-Konformitätsverstoßberichten in Echtzeit.

8. Verfahren nach Anspruch 7, wobei die unterstützenden Sicherheitsmanagementfunktionen mindestens eines von Folgendem umfassen:
Empfangen (602) von Sicherheitsanforderungs- und Sicherheitsattributinformationen zum Erfüllen der S-SLA jedes Unternehmens (106a-106n) von der SSOF in dem HPLMN (102) und Zuordnen der Sicherheitsanforderungs- und Sicherheitsattributinformationen zu Sicherheitsrichtlinien und Sicherheitskontrollen zur Durchsetzung innerhalb der HPLMN-Netzwerkfunktionen und -Netzwerkentitäten;
Unterstützen (606) von Sicherheitsmanagementaktivitäten in Bezug auf die Sicherung der HPLMN-Netzwerkfunktionen, HPLMN-NF, und der Netzwerkelemente, NE, wie in den S-SLAs mit jedem VPLMN (104a-104n) vereinbart;
Überwachen (608) des S-SLA-Status von NF und NE gemäß den Sicherheitsattributen;
Berechnen (610) des Konformitätsstatus in Echtzeit für die S-SLA jedes Unternehmens (106a-106n) und Melden der Konformitätsbewertungen und Konformitätsverstöße an die SSOF in dem HPLMN (102); und
Verwalten (612) von historischen Informationen für die S-SLA-Konformität pro Unternehmen und pro PLMN.

9. Verfahren nach einem der Ansprüche 1-8, wobei die SSOF Folgendes umfasst:
einen Referenzpunkt (208a) einer Northbound-Sicherheitsdienstorchestrierungsfunktion, Nssof, der dazu konfiguriert ist, über eine Schnittstelle eine Verbindung mit jedem VPLMN (104a-104n) zum Austauschen von Informationen über S-SLA-Sicherheitsattribute herzustellen; und
einen weiteren Nssof-Referenzpunkt (208b), der dazu konfiguriert ist, über eine Schnittstelle eine Verbindung mit jedem Unternehmen (106a-106n) zum Austauschen von Informationen über S-SLA-Sicherheitsattribute herzustellen.

10. Verfahren (1000) zur Orchestrierung einer Sicherheitsdienstgütevereinbarung, S-SLA, das von einer Sicherheitsdienstorchestrierungsfunktion, SSOF, in einer Kommunikationsinfrastruktur implementiert wird, die eine Mehrzahl von öffentlichen Landfunknetzwerken, PLMNs, und eine Mehrzahl von Unternehmen (106a-106n) umfasst, wobei das Verfahren Folgendes umfasst:
Übertragen (1004) einer S-SLA-Abfrage durch eine SSOF in einem öffentlichen Heimat-Landfunknetzwerk, HPLMN, (102) der Mehrzahl von PLMNs an ein oder mehrere öffentliche Besucher-Landfunknetzwerke, VPLMNs, (104a-104n) der Mehrzahl von PLMNs, um spezifische Geschäftsdienste mit spezifischen Sicherheitsattributen zu unterstützen;
Empfangen (1006) einer Antwort durch die SSOF in dem HPLMN (102) von jedem VPLMN (104a-104n), die eine eindeutige S-SLA umfasst, die Sicherheitsattribute umfasst, die die VPLMNs (104a-104n) bereitstellen können und auf der S-SLA-Abfrage basieren;
Zusammenführen (1008) der Sicherheitsattribute, die von jedem VPLMN (104a-104n) empfangen werden, durch die SSOF in dem HPLMN (102) zu einer gemeinsamen Sicherheitsbasislinienfähigkeitsvorlagen-S-SLA zur Kommunikation an Geschäftsdienstbenutzer oder jedes der Unternehmen (106a-106n);
Empfangen (1010) einer Unternehmens-S-SLA-Abfrage durch die SSOF in dem HPLMN (102) von einem abfragenden Unternehmen (106a) der Mehrzahl von Unternehmen (106a-106n), wobei die Unternehmens-S-SLA-Abfrage ein spezifisches Niveau von Sicherheitsattributen umfasst, das das abfragende Unternehmen (106a) in Roaming-Situationen erfüllt haben möchte;
Durchführen (1012) von Fähigkeitszuordnung zwischen den Sicherheitsattributen in der Unternehmens-S-SLA-Abfrage und der gemeinsamen Sicherheitsbasislinienfähigkeitsvorlagen-S-SLA des HPLMN (102) durch die SSOF in dem HPLMN (102), wobei die gemeinsame Sicherheitsbasislinienfähigkeitsvorlagen-S-SLA eine gemeinsame Fähigkeits-S-SLA definiert, die von dem HPLMN (102) angeboten werden kann;
falls die gemeinsame Sicherheitsbasislinienfähigkeitsvorlagen-S-SLA den Sicherheitsattributen in der Unternehmens-S-SLA entspricht,
Anbieten (1014) der gemeinsamen Fähigkeits-S-SLA dem abfragenden Unternehmen (106a-106n) durch die SSOF in dem HPLMN (102) für Roaming-Situationen;
Empfangen (1022) einer Antwort durch die SSOF in dem HPLMN (102) von dem abfragenden Unternehmen (106a), wobei die Antwort eine Annahme oder Ablehnung der gemeinsamen Fähigkeits-S-SLA umfasst;
falls die gemeinsame Sicherheitsbasislinienfähigkeitsvorlagen-S-SLA nicht den Sicherheitsattributen in der Unternehmens-S-SLA entspricht,
Prüfen (1016) von Sicherheitsattributen jedes VPLMN (104a-104n) durch die SSOF in dem HPLMN (102), um eine Sicherheitsfähigkeit zu ermitteln, die den Sicherheitsattributen in der Unternehmens-S-SLA-Abfrage entspricht;
Aushandeln (1018) einer dienstspezifischen Roaming-S-SLA durch die SSOF in dem HPLMN (102) mit einem spezifischen VPLMN (104b) in Reaktion darauf, dass eine Entsprechung zwischen der Sicherheitsfähigkeit des spezifischen VPLMN (104b) und den Sicherheitsattributen in der Unternehmens-S-SLA-Abfrage ermittelt wird;
Anbieten (1020) der dienstspezifischen Roaming-S-SLA dem abfragenden Unternehmen (106a) in Reaktion auf das Aushandeln der dienstspezifischen Roaming-S-SLA mit dem VPLMN (104b); und
Empfangen (1022) einer Antwort von dem abfragenden Unternehmen (106a), wobei die Antwort eine Annahme oder Ablehnung der dienstspezifischen-S-SLA umfasst.

11. Verfahren nach Anspruch 10, ferner umfassend Austauschen (1002) von Informationssicherheitsattributen und assoziierten Attributwertebereichen zwischen den PLMNs, die jedes PLMN von den anderen PLMNs abfragen kann.

12. Verfahren nach einem der Ansprüche 10 oder 11, ferner umfassend Bereitstellen (1002) eines Katalogs durch die SSOF in dem HPLMN (102) an jedes Unternehmen der Mehrzahl von Unternehmen (106a-106n), die von dem HPLMN (102) bedient werden, wobei der Katalog Typen von Geschäftsdiensten umfasst, die das HPLMN (102) bereitstellen kann und die die Unternehmen (106a-106n) von dem HPLMN (102) abfragen können.

13. Verfahren nach einem der Ansprüche 10-12, das pro Unternehmen, pro Dienst und pro Vertrauensdomäne wiederholt wird.

14. Verfahren nach einem der Ansprüche 10-13, ferner umfassend Überwachen (1024) der gemeinsamen Fähigkeits-S-SLA oder der dienstspezifischen Roaming-S-SLA auf Konformität in Reaktion auf die Annahme durch das abfragende Unternehmen (106a).

15. Computervorrichtung (300) in einem öffentlichen Heimat-Landfunknetzwerk, HPLMN, (102), umfassend eine Sicherheitsdienstorchestrierungsfunktion, SSOF, einer Mehrzahl von öffentlichen Landfunknetzwerken, PLMNs, wobei die Computervorrichtung Folgendes umfasst:
Verarbeitungsschaltungsanordnung (303); und
Speicher (305), der mit der Verarbeitungsschaltungsanordnung gekoppelt ist, wobei der Speicher Anweisungen umfasst, die bei Ausführung durch die Verarbeitungsschaltungsanordnung die Computervorrichtung zu Folgendem veranlassen:
Übertragen (1004) einer S-SLA-Abfrage durch eine SSOF in einem HPLMN (102) der Mehrzahl von PLMNs an ein oder mehrere öffentliche Besucher-Landfunknetzwerke, VPLMNs, (104a-104n) der Mehrzahl von PLMNs, um spezifische Geschäftsdienste mit spezifischen Sicherheitsattributen zu unterstützen;
Empfangen (1006) einer Antwort durch die SSOF in dem HPLMN (102) von jedem VPLMN (104a-104n), die eine eindeutige S-SLA umfasst, die Sicherheitsattribute umfasst, die das VPLMN (104a-104n) bereitstellen kann und auf der S-SLA-Abfrage basieren; und
Zusammenführen (1008) der Sicherheitsattribute, die von jedem VPLMN (104a-104b) empfangen werden, durch die SSOF in dem HPLMN (102) zu einer gemeinsamen Sicherheitsbasislinienfähigkeitsvorlagen-S-SLA zur Kommunikation an Geschäftsdienstbenutzer oder jedes der Unternehmen (106a-106n);
Empfangen (1010) einer Unternehmens-S-SLA-Abfrage durch die SSOF in dem HPLMN (102) von einem abfragenden Unternehmen (106a) der Mehrzahl von Unternehmen (106a-106n), wobei die Unternehmens-S-SLA-Abfrage ein spezifisches Niveau von Sicherheitsattributen umfasst, das das abfragende Unternehmen in Roaming-Situationen erfüllt haben möchte;
Durchführen (1012) von Fähigkeitszuordnung zwischen den Sicherheitsattributen in der Unternehmens-S-SLA-Abfrage und der gemeinsamen Sicherheitsbasislinienfähigkeitsvorlagen-S-SLA des HPLMN (102) durch die SSOF in dem HPLMN (102), wobei die gemeinsame Sicherheitsbasislinienfähigkeitsvorlagen-S-SLA eine gemeinsame Fähigkeits-S-SLA definiert, die von dem HPLMN (102);
falls die gemeinsame Sicherheitsbasislinienfähigkeitsvorlagen-S-SLA den Sicherheitsattributen in der Unternehmens-S-SLA entspricht,
Anbieten (1014) der gemeinsamen Fähigkeits-S-SLA durch die SSOF in dem HPLMN (102) dem abfragenden Unternehmen (106a) für Roaming-Situationen;
Empfangen (1022) einer Antwort durch die SSOF in dem HPLMN (102) von dem abfragenden Unternehmen (106a), wobei die Antwort eine Annahme oder Ablehnung der gemeinsamen Fähigkeits-S-SLA umfasst;
falls die gemeinsame Sicherheitsbasislinienfähigkeitsvorlagen-S-SLA nicht den Sicherheitsattributen in der Unternehmens-S-SLA entspricht,
Prüfen (1016) von Sicherheitsattributen jedes VPLMN (104a-104n) durch die SSOF in dem HPLMN (102), um eine Sicherheitsfähigkeit zu ermitteln, die den Sicherheitsattributen in der Unternehmens-S-SLA-Abfrage entspricht, in Reaktion darauf, dass die gemeinsame Sicherheitsbasislinienfähigkeitsvorlagen-S-SLA nicht den Sicherheitsattributen in der Unternehmens-S-SLA entspricht;
Aushandeln (1018) einer dienstspezifischen Roaming-S-SLA durch die SSOF in dem HPLMN (102) mit einem spezifischen VPLMN (104b) in Reaktion darauf, dass eine Entsprechung zwischen der Sicherheitsfähigkeit des spezifischen VPLMN (104b) und den Sicherheitsattributen in der Unternehmens-S-SLA-Abfrage ermittelt wird;
Anbieten (1020) der dienstspezifischen Roaming-S-SLA dem abfragenden Unternehmen (106a) in Reaktion auf das Aushandeln der dienstspezifischen Roaming-S-SLA mit dem VPLMN (104b); und
Empfangen (1022) einer Antwort von dem abfragenden Unternehmen (106a), wobei die Antwort eine Annahme oder Ablehnung der dienstspezifischen-S-SLA umfasst.

16. Computervorrichtung nach Anspruch 15, wobei der Speicher Anweisungen umfasst, die bei Ausführung durch die Verarbeitungsschaltungsanordnung die Computervorrichtung zum Durchführen von Operationen nach einem der Ansprüche 11-14 veranlassen.

17. Computerprogrammprodukt, umfassend ein nichtflüchtiges Speichermedium, das Programmcode umfasst, der von Verarbeitungsschaltungsanordnung (303) einer Computervorrichtung (300) ausgeführt werden soll, wobei die Ausführung des Programmcodes die Computervorrichtung (300) zum Durchführen von Operationen nach einem der Ansprüche oder 10-13 veranlasst.

## Revendications

1. Procédé (400) mis en œuvre par une fonction d'orchestration de service de sécurité, SSOF, (202) dans une infrastructure de communication, qui inclut une pluralité de réseaux mobiles terrestres publics, PLMN, (102, 104) et une pluralité d'entreprises (106) desservant une pluralité d'utilisateurs finaux, pour une orchestration d'un accord de niveau de service de sécurité, S-SLA, le procédé comprenant :
la réception (402), par une SSOF dans un réseau mobile terrestre public de rattachement, HPLMN (102), d'une demande de S-SLA depuis une ou plusieurs de la pluralité d'entreprises (106a-106n), dans lequel chaque demande de S-SLA comprend une pluralité d'exigences et dans lequel le HPLMN (102) correspond à l'un de la pluralité de PLMN et dans lequel chacune des entreprises (106a-106n) dessert une pluralité d'utilisateurs finaux ;
la conversion (404), par la SSOF dans le HPLMN (102), de chaque demande de S-SLA en un S-SLA d'entreprise commun pouvant être proposé à chaque entreprise (106a-106n), dans lequel le S-SLA d'entreprise commun comprend des attributs de sécurité que le HPLMN (102) est capable de fournir à chacune des entreprises (106a-106n) ;
la proposition (406), par la SSOF dans le HPLMN (102), du S-SLA d'entreprise commun à chaque entreprise (106a-106n) ayant soumis la demande de S-SLA ;
la transformation (408), par la SSOF dans le HPLMN (102), de chaque demande de S-SLA des une ou plusieurs entreprises (106a-106n) en politiques et contrôles de sécurité à mettre en œuvre à l'intérieur du HPLMN (102) ;
la transmission (418), par la SSOF dans le HPLMN (102), d'une demande de surveillance de conformité de S-SLA à une SSOF respective dans chaque réseau mobile public visité, VPLMN (104a-104n) ;
la négociation (410), par la SSOF dans le HPLMN (102), d'une exécution du S-SLA d'entreprise commun avec une SSOF dans un VPLMN (104a), dans des situations d'itinérance des utilisateurs finaux ; et
si l'exécution de S-SLA demandée ne peut pas être réalisée avec le S-SLA d'entreprise commun dans le VPLMN (104a), la négociation (411), par la SSOF dans le HPLMN (102) avec une SSOF dans un autre VPLMN (104b), d'une exécution de S-SLA spécifique au service.

2. Procédé selon la revendication 1, comprenant en outre le mappage de capacités (412) d'attributs de sécurité pris en charge pour des services commerciaux disponibles dans différents VPLMN (104a-104n) avec des attributs de sécurité spécifiques aux services commerciaux demandés que le HPLMN (102) est capable de fournir aux entreprises (106a-106n) dans leurs demandes de S-SLA.

3. Procédé selon l'une quelconque des revendications 1 et 2, comprenant en outre la fourniture (414) d'un mappage et d'une optimisation de capacités entre des attributs de sécurité de HPLMN (102) et de VPLMN (104a).

4. Procédé selon l'une quelconque des revendications 1 à 3, comprenant en outre l'information (416) de chaque entreprise (106a-106n) en ce qui concerne la mesure dans laquelle des exigences de S-SLA peuvent être remplies dans des situations d'itinérance.

5. Procédé selon l'une quelconque des revendications 1 à 4, comprenant en outre :
la réception (420) de demandes de surveillance de conformité depuis une ou plusieurs entreprises (106a-106n) et depuis la SSOF dans un ou plusieurs VPLMN (104a-104n) ; et
la transmission (422) d'un résultat de surveillance de conformité de S-SLA à chaque entreprise (106a-106n) et à chaque SSOF depuis laquelle la demande de surveillance de conformité a été reçue.

6. Procédé selon l'une quelconque des revendications 1 à 5, comprenant en outre le maintien (424) d'un référentiel de données de capacités pour des références de sécurité garanties communes dans le HPLMN (102) et le VPLMN, et de capacités de référence de sécurité spécifiques au service par PLMN et par entreprise.

7. Procédé selon l'une quelconque des revendications 1 à 6, dans lequel la SSOF dans le HPLMN (102) interagit avec des fonctions de gestion de sécurité de support pour réaliser un ensemble de fonctions comprenant :
l'envoi (502) d'informations de S-SLA et d'informations d'attributs de sécurité associées à une entreprise (106a) particulière aux fonctions de gestion de sécurité de support ;
la réception (504) de rapports d'état de conformité de S-SLA dans des intervalles demandés et à la demande en réponse à une demande émanant de l'entreprise (106a) particulière ; et
la réception (506) de rapports d'infraction de conformité de S-SLA en temps réel.

8. Procédé selon la revendication 7, dans lequel les fonctions de gestion de sécurité de support comprennent au moins l'une parmi :
la réception (602), depuis la SSOF dans le HPLMN (102), d'informations d'exigences de sécurité et d'attributs de sécurité pour l'exécution du S-SLA de chaque entreprise (106a-106n) et le mappage des informations d'exigences de sécurité et d'attributs de sécurité dans des politiques de sécurité et des contrôles de sécurité pour leur mise en œuvre dans des fonctions de réseau et des entités de réseau HPLMN ;
la prise en charge (606) d'activités de gestion de sécurité relatives à la protection des fonctions de réseau, NF, et des éléments de réseau, NE, HPLMN comme convenu dans les S-SLA avec chaque VPLMN (104a-104n) ;
la surveillance (608) d'un état de S-SLA des NF et NE selon des attributs de sécurité définis ;
le calcul (610) d'un état de conformité en temps réel pour le S-SLA de chaque entreprise (106a-106n) et la notification de scores de conformité et d'infractions de conformité à la SSOF dans le HPLMN (102) ; et
le maintien (612) d'informations historiques de conformité de S-SLA par entreprise et par PLMN.

9. Procédé selon l'une quelconque des revendications 1 à 8, dans lequel la SSOF comprend :
un point de référence de fonction d'orchestration de service de sécurité vers le nord, Nssof, (208a) configuré pour s'interfacer avec chaque VPLMN (104a-104n) pour échanger des informations sur des attributs de sécurité de S-SLA ; et
un autre point de référence de Nssof (208b) configuré pour s'interfacer avec chaque entreprise (106a-106n) pour échanger des informations sur les attributs de sécurité de S-SLA.

10. Procédé (1000) mis en œuvre par une fonction d'orchestration de service de sécurité, SSOF, dans une infrastructure de communication, qui inclut une pluralité de réseaux mobiles terrestres publics, PLMN, et une pluralité d'entreprises (106a-106n), pour une orchestration d'un accord de niveau de service de sécurité, S-SLA, le procédé comprenant :
la transmission (1004), par une SSOF dans un réseau mobile terrestre public de rattachement, HPLMN (102), de la pluralité de PLMN, d'une demande de S-SLA à un ou plusieurs réseaux mobiles terrestres publics visités, VPLMN (104a-104n), de la pluralité de PLMN pour prendre en charge des services commerciaux spécifiques avec des attributs de sécurité spécifiques ;
la réception (1006), par la SSOF dans le HPLMN (102), d'une réponse depuis chaque VPLMN (104a-104n) incluant un S-SLA unique incluant des attributs de sécurité que les VPLMN (104a-104n) sont capables de fournir et sur la base de la demande de S-SLA ;
la fusion (1008), par la SSOF dans le HPLMN (102), des attributs de sécurité reçus depuis chaque VPLMN (104a-104n) dans un S-SLA de modèle de capacité de référence de sécurité commune pour une communication à des utilisateurs de services commerciaux ou à chacune des entreprises (106a-106n) ;
la réception (1010), par la SSOF dans le HPLMN (102), d'une demande de S-SLA d'entreprise depuis une entreprise demandeuse (106a) de la pluralité d'entreprises (106a-106n), dans lequel la demande de S-SLA d'entreprise comprend un niveau spécifique d'attributs de sécurité que l'entreprise demandeuse (106a) souhaite voir atteint dans des situations d'itinérance ;
la réalisation (1012), par la SSOF dans le HPLMN (102), d'un mappage de capacités entre les attributs de sécurité dans la demande de S-SLA d'entreprise et le S-SLA de modèle de capacité de référence de sécurité commune du HPLMN (102), dans lequel le S-SLA de modèle de capacité de référence de sécurité commune définit un S-SLA de capacité commune pouvant être proposé par le HPLMN (102) ;
si le S-SLA de modèle de capacité de référence de sécurité commune correspond aux attributs de sécurité dans la demande de S-SLA d'entreprise,
la proposition (1014), par la SSOF dans le HPLMN (102), du S-SLA de capacité commune à l'entreprise demandeuse (106a) pour des situations d'itinérance ; et
la réception (1022), par la SSOF dans le HPLMN (102), d'une réponse depuis l'entreprise demandeuse (106a), dans lequel la réponse comprend une acceptation ou un refus du S-SLA de capacité commune ;
si le S-SLA de modèle de capacité de référence de sécurité commune ne correspond pas aux attributs de sécurité dans la demande de S-SLA d'entreprise,
le contrôle (1016), par la SSOF dans le HPLMN (102), d'attributs de sécurité de chaque VPLMN (104a-104n) pour trouver une capacité de sécurité correspondant aux attributs de sécurité dans la demande de S-SLA d'entreprise ;
la négociation (1018), par la SSOF dans le HPLMN (102), d'un S-SLA d'itinérance spécifique au service avec un VPLMN (104b) particulier en réponse à la découverte d'une correspondance entre la capacité de sécurité du VPLMN (104b) particulier et les attributs de sécurité dans la demande de S-SLA d'entreprise ;
la proposition (1020) du S-SLA d'itinérance spécifique au service à l'entreprise demandeuse (106a) en réponse à la négociation du S-SLA d'itinérance spécifique au service avec le VPLMN (104b) ; et
la réception (1022) d'une réponse depuis l'entreprise demandeuse (106a), dans lequel la réponse comprend une acceptation ou un refus du S-SLA spécifique au service.

11. Procédé selon la revendication 10, comprenant en outre l'échange (1002), entre les PLMN, d'attributs de sécurité d'informations et de plages de valeurs d'attributs associées que chaque PLMN peut demander aux autres PLMN.

12. Procédé selon l'une quelconque des revendications 10 et 11, comprenant en outre la fourniture (1002), par la SSOF dans le HPLMN (102), d'un catalogue à chaque entreprise de la pluralité d'entreprises (106a-106n) desservies par le HPLMN (102), le catalogue comprenant des types de services commerciaux que le HPLMN (102) est capable de fournir et que les entreprises (106a-106n) peuvent demander au HPLMN (102).

13. Procédé selon l'une quelconque des revendications 10 à 12, qui est répété par entreprise, par service et par domaine de confiance.

14. Procédé selon l'une quelconque des revendications 10 à 13, comprenant en outre la surveillance (1024) de la conformité au S-SLA de capacité commune ou au S-SLA d'itinérance spécifique au service en réponse à son acceptation par l'entreprise demandeuse (106a).

15. Dispositif informatique (300) dans un réseau mobile terrestre public de rattachement, HPLMN (102), comprenant une fonction d'orchestration de services de sécurité, SSOF, d'une pluralité de réseaux mobiles terrestres publics, PLMN, le dispositif informatique comprenant :
une circuiterie de traitement (303) ; et
une mémoire (305) couplée à la circuiterie de traitement, dans lequel la mémoire inclut des instructions qui, lorsqu'elles sont exécutées par la circuiterie de traitement, amènent le dispositif informatique à :
transmettre (1004), par une SSOF dans un HPLMN (102) de la pluralité de PLMN, une demande de S-SLA à un ou plusieurs réseaux mobiles terrestres publics visités, VPLMN (104a-104n), de la pluralité de PLMN pour prendre en charge des services commerciaux spécifiques avec des attributs de sécurité spécifiques ;
recevoir (1006), par la SSOF dans le HPLMN (102), une réponse depuis chaque VPLMN (104a-104n) incluant un S-SLA unique incluant des attributs de sécurité que les VPLMN (104a-104n) sont capables de fournir et sur la base de la demande de S-SLA ; et
fusionner (1008), par la SSOF dans le HPLMN (102), les attributs de sécurité reçus depuis chaque VPLMN (104a-104n) dans un S-SLA de modèle de capacité de référence de sécurité commune pour une communication à des utilisateurs de services commerciaux ou à chacune des entreprises (106a-106n) ;
recevoir (1010), par la SSOF dans le HPLMN (102), une demande de S-SLA d'entreprise depuis une entreprise demandeuse (106a) de la pluralité d'entreprises (106a-106n), dans lequel la demande de S-SLA d'entreprise comprend un niveau spécifique d'attributs de sécurité que l'entreprise demandeuse souhaite voir atteint dans des situations d'itinérance ;
réaliser (1012), par la SSOF dans le HPLMN (102), un mappage de capacités entre les attributs de sécurité dans la demande de S-SLA d'entreprise et le S-SLA de modèle de capacité de référence de sécurité commune du HPLMN (102), dans lequel le S-SLA de modèle de capacité de référence de sécurité commune définit un S-SLA de capacité commune pouvant être proposé par le HPLMN (102) ;
si le S-SLA de modèle de capacité de référence de sécurité commune correspond aux attributs de sécurité dans la demande de S-SLA d'entreprise,
proposer (1014), par la SSOF dans le HPLMN (102), le S-SLA de capacité commune à l'entreprise demandeuse (106a) pour des situations d'itinérance ;
recevoir (1022), par la SSOF dans le HPLMN (102), une réponse depuis l'entreprise demandeuse (106a), dans lequel la réponse comprend une acceptation ou un refus du S-SLA de capacité commune ;
si le S-SLA de modèle de capacité de référence de sécurité commune ne correspond pas aux attributs de sécurité dans la demande de S-SLA d'entreprise,
contrôler (1016), par la SSOF dans le HPLMN (102), des attributs de sécurité de chaque VPLMN (104a-104n) pour trouver une capacité de sécurité correspondant aux attributs de sécurité dans la demande de S-SLA d'entreprise en réponse au fait que le S-SLA de modèle de capacité de référence de sécurité commune ne correspond pas aux attributs de sécurité dans la demande de S-SLA d'entreprise ;
négocier (1018), par la SSOF dans le HPLMN (102), un S-SLA d'itinérance spécifique au service avec un VPLMN (104b) particulier en réponse à la découverte d'une correspondance entre la capacité de sécurité du VPLMN (104b) particulier et les attributs de sécurité dans la demande de S-SLA d'entreprise ;
proposer (1020) le S-SLA d'itinérance spécifique au service à l'entreprise demandeuse (106a) en réponse à la négociation du S-SLA d'itinérance spécifique au service avec le VPLMN (104b) ; et
recevoir (1022) une réponse depuis l'entreprise demandeuse (106a), dans lequel la réponse comprend une acceptation ou un refus du S-SLA spécifique au service.

16. Dispositif informatique selon la revendication 15, dans lequel la mémoire inclut des instructions qui, lorsqu'elles sont exécutées par la circuiterie de traitement, amènent le dispositif informatique à réaliser des opérations selon l'une quelconque des revendications 11 à 14.

17. Produit de programme informatique comprenant un support de stockage non transitoire incluant un code de programme à exécuter par une circuiterie de traitement (303) d'un dispositif informatique (300), selon lequel une exécution du code de programme amène le dispositif informatique (300) à réaliser des opérations selon l'une quelconque des revendications 10 à 13.
